# EUROPÄISCHE PATENTSCHRIFT

(11) **EP 1 683 701 B1**
(45) Veröffentlichungstag und Bekanntmachung des Hinweises auf die Patenterteilung: **22.10.2008**
(21) Anmeldenummer: 06009618.7
(22) Anmeldetag: 03.04.2001
(51) Int. Cl.: B62D 1/16

(54) **Lagerungskasten für die Lagerung einer Lenkwelle**
Support casing for housing a steering shaft
Logement de support pour un arbre de direction

(30) Priorität: 06.04.2000 AT 5812000; 21.12.2000 AT 21212000
(43) Veröffentlichungstag der Anmeldung: 26.07.2006
(62) Teilanmeldung aus: 01921004.6
(73) Patentinhaber: ThyssenKrupp Presta Aktiengesellschaft, 9492 Eschen (LI)
(72) Erfinder: Heiml, Roland, 4870 Vöcklamarkt (AT)
(74) Vertreter: Secklehner, Günter

(56) Entgegenhaltungen:
- EP-A- 0 816 204
- US-A- 4 541 742
- US-A- 5 531 526

## Beschreibung

Die Erfindung betrifft einen Lagerungskasten für die Lagerung einer Lenkwelle sowie ein Verfahren zur Montage von Lagerelementen entsprechend den Merkmalen in den Oberbegriffen der Ansprüche 1, 20 und 21.

In der gattungsgemäßen Druckschrift EP 0 816 204 A1 ist ein Mantelrohr beschrieben, das aus mehreren Stanz- und Biegeteilen besteht. Ein oberer Teil zum Umgeben der Lenkwelle ist in einer zu seiner Längserstreckung senkrechten Ebene etwa U-förmig gestaltet mit einem gewölbten Oberteil und zwei ebenen Seitenschenkeln. Ein untere Teil ist im wesentlichen flach ausgebildet und schließt den oberen Teil ab. Ein weiterer zur Versteifung am oberen Teil vernieteter, im wesentlichen flacher Teil, ist parallel zum unteren Teil angebracht. An den stirnseitigen Enden des Mantelgehäuses sind spanlos geformte, fugenlose Lageraufnahmestellen vorgesehen, in die Kugellager zur Lagerung der Lenkwelle eingepresst werden. Die Lageraufnahmestellen sind im Abstreckverfahren, also durch spanlose Verformung hergestellt und sind ausschließlich jeweils mit Hilfe von mittels Nietlappen erstellte Nietverbindungen mit dem Mantelgehäuse verbunden. Der obere und untere Teil sind durch gegenseitige Vernietung miteinander verbunden. Dazu ist der untere Teil seitlich mit Lappen versehen, welche in Löcher der Seitenschenkeln des oberen Teils eingreifen und verstemmt werden. Einige dieser Nietstellen können durch Punktschweißstellen ersetzt werden oder werden die Nietstellen zusätzlich durch Punktschweißung verstärkt. Nachteilig ist die hohe Komplexität des Mantelrohrs, so dass in der Serienproduktion Schwierigkeiten auftreten können. Des weiteren sind für die Positionierung der Kugellager in den Lageraufnahmestellen Positioniermittel erforderlich, wodurch die Einstellung eines vorgesehenen Einbaumaßes oder der Ausgleich von Fertigungstoleranzen nicht möglich ist.

In der DE 692 00 117 T2 ist ein weiteres Mantelrohr beschrieben, das aus einem einstückigen Zuschnittteil gefertigt ist, der über seine Längserstreckung an den beiden gegenüberliegenden Seiten Laschen angeordnet hat, die über ein Klammersystem, oder Bördeln oder Schweißen miteinander vereinigt werden und ein zylindrisches Rohr bilden. Nachteilig dabei ist, dass ein relativ hoher Montageaufwand zu betreiben ist und dass eine automatisierte Fertigung nur unter schwierigen Bedingungen und hohen Toleranzabweichungen möglich ist.

Gemäß einem anderen veröffentlichten Dokument EP 0 926 733 A2 ist ein Mantelrohr zur Umgebung der Lenkwelle bekannt, das aus einem rohrförmigen Mantel gebildet ist, der in seiner Längserstreckung eine Ausnehmung für die längsverschiebbare Fixierung der Lenkwelle aufweist und an dessen beiden gegenüberliegenden Stirnseiten jeweils eine Lageraufnahmestelle mit eingepresstem Lager angeordnet ist. Weiters ist das Mantelrohr in Richtung der Frontseite des Fahrzeuges auf einen größeren Durchmesser aufgeweitet. Nachteilig ist dabei, dass der zu seiner Längserstreckung senkrecht ausgebildete rohrförmige Querschnitt eine niedrigere Steifigkeit als ein mehreckiger Querschnitt besitzt. Des weiteren treten hohe Toleranzabweichungen auf und ist deshalb eine Nachbearbeitung erforderlich.

Des weiteren ist aus der US 5,531,526 A ein Lagerungskasten für die Lagerung einer Lenkwelle bekannt, bei dem in einem Mantelrohr zumindest an einem Ende ein Gehäuse für eine Rollenlagerung angeordnet ist. Die Rollenlagerung umfasst einen Außen- und Innenring sowie zwischen diesen angeordnete Wälzkörper, wobei der Außenring gegen eine vom Gehäuse ausgebildete, umlaufende Schulter abgestützt und der Innenring mit einer Vorspannkraft einer Feder beaufschlagt ist.

Schließlich ist aus der DE 197 50 805 A1 ein spanlos hergestelltes Schrägkugellager für ein Lenkungslager bekannt, welches aus einem Außenring, einem Innenring und dazwischen auf dazugehörigen Laufbahnen abwälzenden Lagerkugeln besteht. Bei diesem Schrägkugellager ist ein Auseinanderfallen des Lagers durch eine Verliersicherung verhindert. Die Verliersicherung ist durch mehrere radial nach außen gerichtete Vorsprünge des Innenringes gebildet, die den Außenring in radialer Richtung überdecken.

Der vorliegenden Erfindung liegt die Aufgabe zugrunde, einen konstruktiv einfachen Lagerungskasten zu schaffen, der in wenigen Fertigungsschritten unter Einhaltung engster Toleranzgrenzen hergestellt werden kann und sich durch eine hohe Steifigkeit auszeichnet. Darüber hinaus soll eine hohe Lagergenauigkeit der Lenkwelle und ein Ausgleich von Fertigungstoleranzen und eine Reduzierung der Einzelbauteile erreicht werden.

Diese Aufgabe der Erfindung wird durch die Merkmale und Maßnahmen der Ansprüche 1, 20 und 21 gelöst. Der Vorteil dieser Lösung liegt darin, dass ein Einbaumaß, beispielsweise zwischen einem vorbestimmbaren Punkt am Mantelrohr und einer vorbestimmbaren Messmarke an der Lenkwelle oder zwischen den Lagerelementen, durch Justierung zumindest eines Lagerelementes und/oder des Mantelrohrs exakt (weniger als 0,1 mm) eingehalten werden kann. Auch wirken sich Fertigungsungenauigkeiten des Mantelrohrs nicht auf die Lagergenauigkeit der Lenkwelle aus, da mit der Einstellung des Einbaumaßes die Lagergenauigkeit der Lenkwelle vorgegeben wird. Damit ist es nunmehr aber auch möglich, die Lenkwelle ohne zusätzliche spielausgleichende Bauelemente, wie beispielsweise Schlangenfedern etc., im Lagerungskasten in Axialrichtung im wesentlichen spielfrei zu lagern. Ferner kann der Lagerungskasten gemäß der Erfindung über seine gesamte Lebensdauer im wesentlichen wartungsfrei betrieben werden. Das Einbaumaß lässt sich auf einfache Weise über aus dem Stand der Technik bekannte, elektronische Messmittel automatisch ermitteln.

Vorteilhaft ist aber auch die Ausführungsvariante nach Anspruch 2, wodurch über ein aus dem Stand der Technik bekanntes Herstellverfahren ein präziser, kostengünstiger und mit hoher Fertigungsgenauigkeit ausgeführter Lagerteil herstellbar ist.

Die Fortbildung nach Anspruch 3 zeichnet sich durch einen einfachen Aufbau aus und ermöglicht eine einfache Herstellung der Lagerteile in hohen Stückzahlen und zu niedrigen Kosten.

Von Vorteil sind auch die Ausbildungen nach den Ansprüchen 4 und 5, wodurch eine Anpassung oder Erhöhung der Steifigkeit des Lagerelementes möglich ist.

Gemäß der Vorgabe eines Verstellbereiches, wie im Anspruch 6 beschrieben, kann ein erforderlicher Verstellweg zum Ausgleich von Fertigungstoleranzen oder zum Einhalten eines vorgesehenen Einbaumaßes definiert werden. Durch die Ausführung eines quasi überdimensionierten Verstellbereiches ist auf einfache Weise eine Verlängerung des Mantelrohres möglich, wodurch, insbesondere bei Verwendung von standardisierten Mantelrohren, dieses für unterschiedliche Typen von Lenkvorrichtungen eines Kraftfahrzeuges eingesetzt werden kann, die beispielsweise einen bestimmten Abstand oder ein gefordertes Einbaumaß erfordern.

Vorteilhaft ist eine Ausgestaltung nach Anspruch 7, wodurch ein stufenloses Einstellen des Lagerelementes gegenüber dem Mantelrohr möglich ist.

Die Weiterbildung nach Anspruch 8 sieht vor, dass durch einen Teilbereich des Mantelrohres ein Aufnahmebereich geschaffen wird, wodurch keine zusätzlichen Mittel zur Aufnahme der Lagerelemente vorgesehen werden müssen.

Die Ausgestaltung nach Anspruch 9 ermöglicht die Verwendung von einem, niedrige Fertigungstoleranzen aufweisenden Mantelrohr, das an den gegenüberliegenden Endbereichen Lageraufnahmestellen als Aufnahmebereich für die Lagerelemente vorsieht, über die ein Ausgleich der Fertigungstoleranzen vorgenommen werden kann.

Eine weitere vorteilhafte Ausführung ist im Anspruch 10 beschrieben, da durch die einstückige Anformung der Aufnahmebereiche für die Lagerelemente, insbesondere der Lageraufnahmestellen, an das Mantelrohr, die Anzahl der Einzelbauteile und die Anzahl der Fügevorgänge, insbesondere der Schweißvorgänge, reduziert werden können.

Gemäß der Ausführung nach Anspruch 11 weist zumindest einer der Teile des Mantelrohrs in einer zu seiner Längserstreckung senkrechten Ebene einen mehreckigen Querschnitt auf, wodurch dem Lagerungskasten eine besonders hohe Steifigkeit verliehen und über die präzisen Lageraufnahmestellen eine hohe Lagergenauigkeit der Lenkwelle erreicht wird. Der erste und weitere Teil sowie die Lageraufnahmestellen und der erste und/oder weitere Teil sind beispielsweise über eine Schweißnaht, insbesondere eine Laser- oder Plasmaschweißnaht, miteinander verbunden, womit durch die geringe, örtliche Wärmeentwicklung eine Vormontage von Bauteilen, Zubehör etc. bei toleranzfreier Ausgestaltung der Konstruktion möglich ist. Durch das Laserschweißen wird nun auch die Möglichkeit geschaffen, Bauteile z.B. aus Kunststoff und dgl. vorzumontieren und nachträglich erst zu verschweißen, ohne dass diese einer unzulässigen Verformung während des Fügevorganges unterliegen. Anderenfalls kann die Verbindung zwischen den Teilen und der Lageraufnahmestellen durch Kleben oder Löten hergestellt werden.

Gemäß Anspruch 12 wird die Verwendung von standardisierten kostengünstigen Formrohren ermöglicht.

Gemäß der Vorgabe eines Verstellbereiches, wie im Anspruch 13 beschrieben, kann ein erforderlicher Verstellweg zum Ausgleich von Fertigungstoleranzen oder zum Einhalten eines Einbaumaßes definiert werden.

Von Vorteil sind auch die Weiterbildungen nach den Ansprüchen 14 bis 17, wodurch zur Fixierung einer Lage bzw. Position der Lagerelemente gegenüber dem Mantelrohr, über aus dem Stand der Technik bekannte kostengünstige, form- und/oder kraftschlüssige Verbindungselemente herangezogen werden können.

Möglich ist auch die Herstellung einer Druckfügeverbindung bzw. Clinchverbindung, wie im Anspruch 18 beschrieben, wobei ohne Wärmeeinwirkung eine nicht lösbare Verbindung hergestellt werden kann.

Von Vorteil ist auch die Ausgestaltung nach Anspruch 19, wodurch der äußere Lagerteil des Lagerelementes mit den Aufnahmesegmenten des Aufnahmebereiches am Mantelrohr einen streifenförmigen Verbindungsbereich zwischen diesen bildet und dadurch eine einfache Verbindungsherstellung ermöglicht. Des weiteren werden während des Positionierens des Lagerteiles gegenüber dem Mantelrohr, diese zueinander formschlüssig geführt, so dass eine Positionierung des Lagerelementes und/oder Mantelrohrs rasch und ohne kompliziert aufgebaute Positioniervorrichtungen möglich ist.

Schließlich sind auch die Maßnahmen 23 bis 27 vorteilhaft, da mit einfachen Verfahrensschritte ein Einbaumaß und/oder Längsabstand zwischen zwei Lagerelementen einfach einstellbar ist und eine Verstellung des Längsabstandes nach vorbestimmbaren mechanischen Sollwerten erfolgt und die Lagerelemente erst nach erfolgter Justierung bevorzugt unlösbar fixiert werden, so dass der die Lenkwelle aufnehmende Lagerungskasten als eigenständige Baueinheit, die mit nur wenigen Fertigungsschritten hergestellt und in einem Kraftfahrzeug eingebaut werden kann, ausgebildet ist, wobei der Lagerungskasten aufgrund des modularen und einfachen Aufbaus in Fertigungsstraßen mit hoher Fertigungsgenauigkeit, die den hohen qualitativen Ansprüchen der Automobilindustrie gerecht wird, hergestellt werden kann. Durch die Verstellbarkeit zumindest eines Lagerelementes kann das Einbaumaß, beispielsweise der Längsabstand zwischen den Lagerelementen eingestellt werden, so dass ein Toleranzausgleich ohne zusätzliche, toleranzausgleichende Bauelemente möglich ist und somit eine im wesentlichen spielfreie Lagerung der Lenkwelle im Mantelrohr möglich ist.

Die Erfindung wird im nachfolgenden anhand der in den Zeichnungen dargestellten Ausführungsbeispiele näher erläutert.

Es zeigen:
- Fig. 1: eine perspektivische Ansicht des Mantelrohres mit Lageraufnahmestellen gemäß der Erfindung;
- Fig. 2: das Mantelrohr in Stimansicht vergrößert und geschnitten gemäß den Linien II - II in Fig. 1;
- Fig. 3: ein Mantelrohr mit Lageraufnahmestellen, Lagern, Verstärkungsleiste und einer Hülse in Seitenansicht geschnitten und in vereinfachter Darstellung;
- Fig. 4: die Verstärkungsleiste in Draufsicht und in vergrößerter Darstellung;
- Fig. 5: die Verstärkungsleiste, geschnitten gemäß den Linien V - V in Fig. 4 ;
- Fig. 6: eine andere Ausführungsvariante des Mantelrohres in Stimansicht geschnitten;
- Fig. 7: eine weitere Ausführungsvariante des Mantelrohres in Stimansicht geschnitten;
- Fig. 8: eine andere Ausführungsvariante des Mantelrohres in Stimansicht geschnitten;
- Fig. 9: das Mantelrohr mit abstehenden Lageraufnahmestellen und in vereinfachter Darstellung;
- Fig. 10: eine weitere Ausführungsvariante des Mantelrohres in Stimansicht geschnitten;
- Fig. 11: eine andere Ausführungsvariante des Mantelrohres in Stimansicht geschnitten;
- Fig. 12: eine weitere Ausführungsvariante des Mantelrohres in Stimansicht geschnitten;
- Fig. 13: eine Leiste mit Ausnehmung in Draufsicht und vereinfachter Darstellung;
- Fig. 14: die Leiste geschnitten gemäß den Linien XIV - XIV in Fig. 13;
- Fig. 15: ein Mantelrohr mit einen an den Stirnseiten integrierten Außenring des Lagers in Seitenansicht geschnitten und in stark vereinfachter Darstellung;
- Fig. 16: eine andere Ausführungsvariante eines erfindungsgemäßen Lagerungskastens mit einem Mantelrohr und einem Tragarm in perspektivischer Ansicht;
- Fig. 17: einen flächigen Zuschnitt- und/oder Stanz- und/oder Biegeteil in Draufsicht und in stark vereinfachter, schematischer Darstellung;
- Fig. 18: eine weitere Ausführungsvariante eines erfindungsgemäßen Lagerungskastens mit dem Mantelrohr und dem Tragarm in perspektivischer Ansicht und in stark vereinfachter, schematischer Darstellung;
- Fig. 19: das Mantelrohr in Stimansicht, geschnitten gemäß den Linien XIX-XIX in Fig. 18 und in stark vereinfachter, schematischer Darstellung;
- Fig. 20: eine andere Ausführungsvariante eines erfindungsgemäßen Lagerungskastens mit dem Mantelrohr und dem Tragarm in perspektivischer Ansicht und in stark vereinfachter, schematischer Darstellung;
- Fig. 21: eine weitere Ausführungsvariante des Lagerungskastens mit dem Mantelrohr und dem Tragarm in perspektivischer Ansicht und in stark vereinfachter, schematischer Darstellung;
- Fig. 22: eine andere Ausführungsvariante eines erfindungsgemäßen Lagerungskastens mit dem Mantelrohr im Längsschnitt gemäß der Fig. 24 mit den erfindungsgemäßen Lagerungselementen in stark vereinfachter, schematischer Darstellung;
- Fig. 23: den Lagerungskasten in Seitenansicht und in stark vereinfachter, schematischer Darstellung;
- Fig. 24: den Lagerungskasten in perspektivischer Ansicht und in stark vereinfachter, schematischer Darstellung;
- Fig. 25: einen Teilbereich des Aufnahmebereiches für das Lagerungselement nach Fig. 22 im Längsschnitt und in stark vereinfachter, schematischer Darstellung;
- Fig. 26: das Mantelrohr und die Lenkwelle mit einer anderen Ausführungsvariante der Anordnung der Lagerungselemente im Längsschnitt und in stark vereinfachter, schematischer Darstellung;
- Fig. 27: das Mantelrohr und die Lenkwelle mit einer weiteren Ausführungsvariante der Anordnung des Lagerungselementes im Längsschnitt und in stark vereinfachter, schematischer Darstellung;
- Fig. 28: einen erfindungsgemäßen Lagerungskasten mit einer Lenkwelle und ein diese aufnehmendes Mantelrohr im Längsschnitt und in stark vereinfachter, schematischer Darstellung;
- Fig. 29: das Mantelrohr und die Lenkwelle mit einer weiteren Ausführungsvariante der Anordnung des Lagerungselementes im Längsschnitt und in stark vereinfachter, schematischer Darstellung;
- Fig. 30: einen Teilbereich des erfindungsgemäßen Lagerungskastens mit einer anderen Ausführung des Aufnahmebereiches an einer Außenseite des Mantelrohres und das Lagerelement im Längsschnitt und in stark vereinfachter schematischer Darstellung;
- Fig. 31: einen Teilbereich des erfindungsgemäßen Lagerungskastens mit einer weiteren Ausführung des Aufnahmebereiches an einer Innenseite des Mantelrohres und das Lagerelement im Längsschnitt und in stark vereinfachter, schematischer Darstellung;
- Fig. 32: einen Teilbereich des erfindungsgemäßen Lagerungskastens mit einer anderen Ausführung des Aufnahmebereiches an einer Außenseite des Mantelrohres und das Lagerelement im Längsschnitt und in stark vereinfachter, schematischer Darstellung;
- Fig. 33: einen Teilbereich des erfindungsgemäßen Lagerungskastens mit einer anderen Ausführung des Aufnahmebereiches an einer Innenseite des Mantelrohres und das Lagerelement im Längsschnitt und in stark vereinfachter, schematischer Darstellung;
- Fig. 34: einen Teilbereich des erfindungsgemäßen Lagerungskastens mit einer anderen Ausführung des Aufnahmebereiches zwischen einer Außen- und Innenseite des Mantelrohres und das Lagerelement im Längsschnitt und in stark vereinfachter, schematischer Darstellung;
- Fig. 35: einen Teilbereich des erfindungsgemäßen Lagerungskastens mit einer anderen Ausführung des Aufnahmebereiches zwischen einer Außen- und Innenseite des Mantelrohres und das Lagerelement im Längsschnitt und in stark vereinfachter, schematischer Darstellung;
- Fig. 36: das erfindungsgemäße Lagerteil bzw. den Außenring in perspektivischer Ansicht und in stark vereinfachter, schematischer Darstellung;
- Fig. 37: einen Teilbereich des erfindungsgemäßen Mantelrohres mit einer anderen Ausführung des erfindungsgemäßen Aufnahmebereiches in perspektivischer Ansicht und in stark vereinfachter, schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

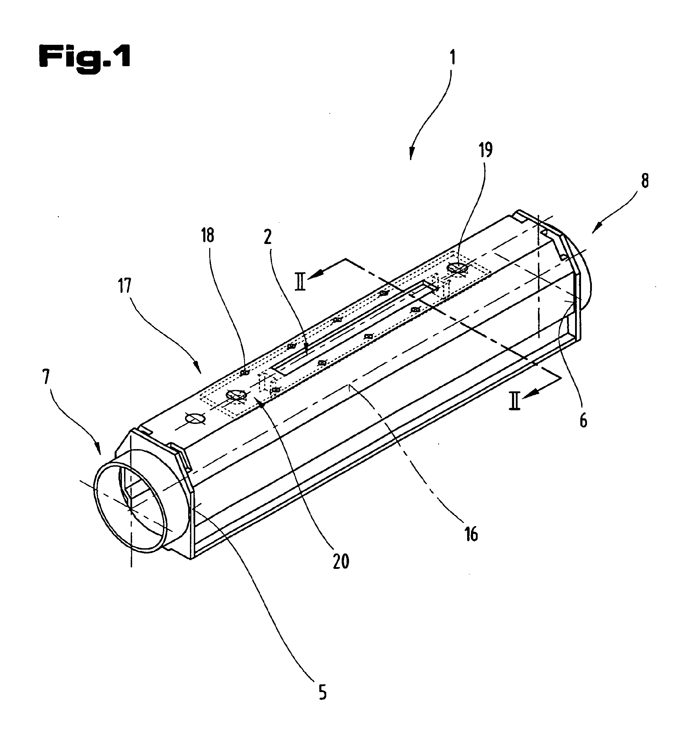

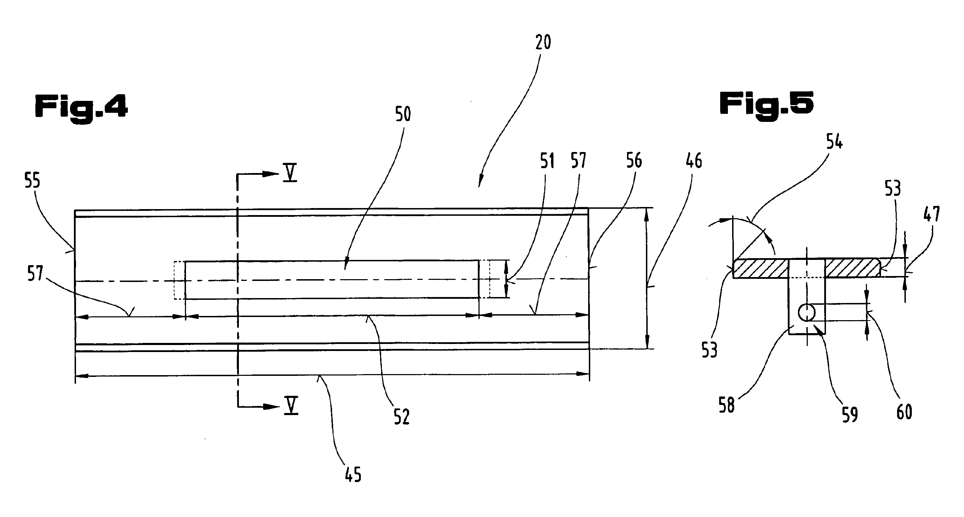

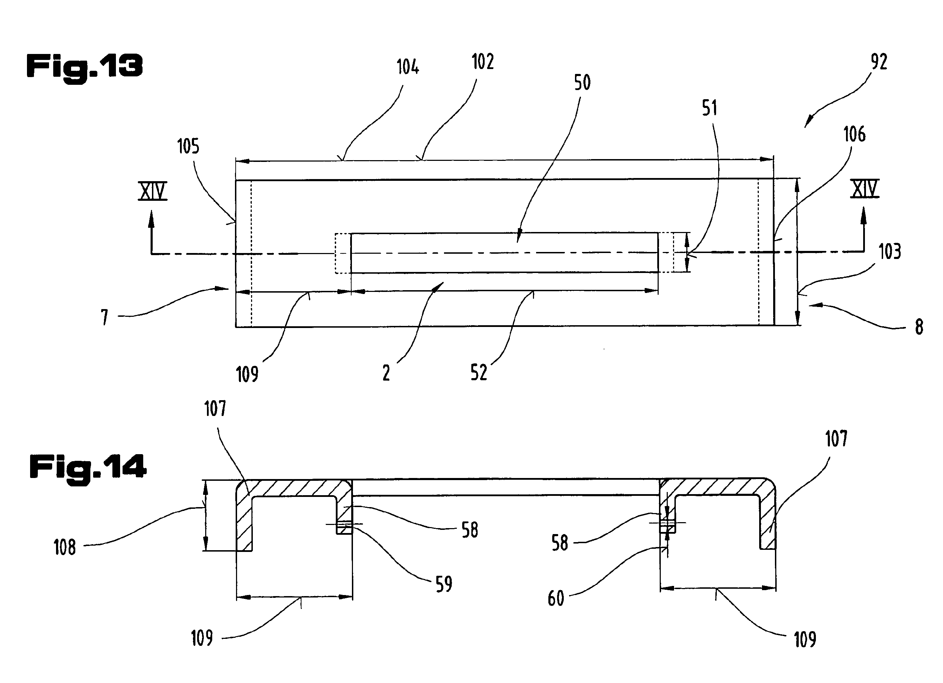

In den Fig. 1 bis 15 ist ein ein Mantelrohr 1 und Aufnahmebereiche für Lagerelemente umfassender Lagerungskasten bzw. Teile davon in unterschiedlichen Ansichten und in stark vereinfachter, schematischer Darstellung gezeigt. Die Aufnahmebereiche sind durch Lageraufnahmestellen gebildet. Auf die detaillierten Ausführungen wird im folgenden näher darauf eingegangen.

In den Fig. 1 bis 5 ist ein Mantelrohr 1 gezeigt, das aus einem mit einer Ausnehmung 2 ausgestatteten oberen Teil 3 und einer diesem gegenüberliegenden unteren Teil 4 gebildet ist. Das Mantelrohr 1, wie beispielsweise in Kraftfahrzeugen eingesetzt, besitzt zwei gegenüberliegenden endseitigen Stirnflächen 5 und 6 Lageraufnahmestellen 7 und 8, die insbesondere als Lagersitzringe oder Lagerschalen ausgebildet sind und mit dem Mantelrohr 1 über ein Verbindungselement miteinander verbunden, beispielsweise verschweißt und/oder verschraubt und/oder vernietet und/oder geklebt sind. Die zur Aufnahme von Lagern 9 und 10, insbesondere Kugellagern, befindlichen fugenlosen rohrförmigen Lageraufnahmestellen 7 und 8 sind mit einem Innendurchmesser 11 und einem Außendurchmesser 12 ausgeführt und besitzen eine an die Stirnflächen 5, 6 angebundene ebenflächige Tragplatte. Die als durchgehend kreisförmig und mit einer Breite 13 ausgeführten fugenlosen Lageraufnahmestellen 7 und 8 bilden einen Rohrabschnitt aus, der durch ein Rollverfahren oder über ein Tiefziehverfahren etc. hergestellt wird. Bevorzugt wird die in Richtung der Fahrerkabine weisende Lageraufnahmestelle 7 oder 8 mit einer größeren Breite ausgeführt, als eine dieser gegenüberliegenden Lageraufnahmestelle 7 oder 8. Die Lageraufnahmestellen 7 und 8 können derart ausgeführt sein, dass die Lager 9 und 10 mit den Lageraufnahmestellen 7 und 8 fix verbunden, beispielsweise eingepresst, angeschweißt, geklebt usw. wird und/oder dass ein vom Lager 9 und 10 ausgebildeter Außenring 14 mit der Lageraufnahmestelle 7 und 8 einen einteiligen oder zweiteiligen Bauteil bildet. Die für die Verstellung und Führung der Länge einer Lenkwelle 15 in Richtung einer Lenkwellenmittellinie 16 erfordert die am oberen Teil 3 des Mantelrohres 1 angebrachte Ausnehmung 2, die beispielsweise als Längsnut, Längsschlitz, Langloch ausgeführt sein kann, um eine Variierung der Bedienungsposition zu gewähren. Das Mantelrohr 1 ist an einer Oberfläche 17 des oberen Teils 3 mit mehreren am Umfang verteilten Bohrungen 18 und 19 für die Verbindung einer Verstärkungsleiste 20 mit dem Mantelgehäuse 1 versehen. Die innenliegende, an einer Basis 21 parallel zur Lenkwellenmittellinie 16 angebrachte Verstärkungsleiste 20 dient zur Versteifung der an der Oberfläche 17 angebrachten Ausnehmung 2 des oberen Teils 3 und wird von außen oder innen, bevorzugt von außen durch eine Schweißverbindung mit dem Mantelrohr 1 verbunden. Für eine Schweißverbindung können alle beliebigen Schweißverfahren, insbesondere Lichtbogenschweißen, Plasmaschweißen oder Laserschweißen etc. angewendet werden, die eine Verbindung mit oder ohne Zusatzwerkstoff zwischen der Verstärkungsleiste 20 mit dem Mantelgehäuse 1, insbesondere dem oberen Teil 3 und/oder zwischen dem oberen Teil 3 und dem unteren Teil 4 und/oder zwischen dem Mantelrohr 1 und einer ebenflächigen Platte der Lageraufnahmestellen 7 und 8 etc. ermöglichen.

Vom oberen Teil 3 mit einer Höhe 22 und dem unteren Teil 4 mit einer Höhe 23 ausgebildete Stirnflächen 24 und 25 bilden eine parallel zur Oberfläche 17 verlaufende imaginäre Teilungsebene 26 aus, auf der eine senkrecht stehende Symmetrieachse 27 angeordnet ist. Bevorzugt wird die Höhe 22 des oberen Teils 3 größer als die vom unteren Teil 4 ausgebildete Höhe 23 ausgeführt. Eine Wandstärke 28 des oberen Teils 3 entspricht einer Wandstärke 29 des unteren Teils 4 und bleibt zweckmäßig über einen gesamten Querschnitt 30 konstant. Der obere Teil 3 mit einer Höhe 22 weist einen mehreckigen, beispielsweise trapezförmigen oder U-förmigen Querschnitt 30 auf, wobei ein an einer Oberkante 31 der Oberfläche 17 ausgebildetes Breitenmaß 32 kleiner ist, als ein parallel zum Breitenmaß 32 angeordnetes Außenmaß 33. Die zwischen der Oberkante 31 des oberen Teils 3 und der imaginären Teilungsebene 26 ausgebildeten Teile von Seitenschenkeln 34 sind in Richtung der Höhe 22 geneigt zueinander verlaufend angeordnet und erweitern sich mit zunehmendem Abstand von der Basis 21 gemäß einem Winkel 35 bis zu einem parallel zur Symmetrieachse 27 angeordneten Zwischenteil 36 mit einem Außenmaß 37, der im anschließenden Bereich eine leichte Verjüngung aufweist. Dem schließt sich ein parallel zur Symmetrieachse 27 nachgeordneter Endteil 38 an, der mit den beiden Stirnflächen 24 die Kontaktstelle zum unteren Teil 4 bildet, welcher mit einem Verbindungselement mit dem unteren Teil 4 verbunden wird. Durch die Verwendung einer einheitlichen Wandstärke 28 und 29 wird an den Stirnflächen 24 und 25 des oberen Teils 3 und des unteren Teils 4 eine Überlappung an der imaginären Teilungsebene 26 geschaffen, die beispielsweise der halben Wandstärke 28 und 29 entsprechen kann. Die durch die Überlappung gebildete Hohlkehle 39 an einer der Symmetrieachse 27 gegenüberliegenden Außenseite 40 oder einer der Symmetrieachse 27 zugewendeten Innenseite 41 des Mantelrohres 1 ist für die Herstellung einer Verbindung, insbesondere einer Schweißverbindung, von großem Vorteil. Durch eine derartige Ausführung wird eine Vereinfachung der Vorbereitungsarbeiten, die im weiteren Sinne für die Verbindung des oberen Teils 3 und des unteren Teils 4 zu tätigen sind, erreicht, da die Ausführung von Montageeinrichtungen konstruktiv einfacher und wirtschaftlich gestaltet werden können. Die Montagearbeiten werden dadurch wesentlich vereinfacht und beschleunigt.

Der untere Teil 4 mit der Höhe 23 bildet einen beispielsweise U-förmigen Querschnitt 42 aus, mit zwei parallel zur Symmetrieachse 27 verlaufenden Seitenschenkel 43, dessen Außenmaß 44 gegenüber dem Außenmaß 33 kleiner, gleich oder größer ausgeführt ist und kann mit dem Außenmaß 37 gleichgesetzt werden. Dementsprechend ergibt sich die Überlappung und eine damit verbundene Überragung der Innenseite 41 oder der Außenseite 40. Es besteht natürlich auch die Möglichkeit, dass sich ein deckungsgleicher Verlauf der Seitenschenkel 34 und 43 ergibt.

Die in Richtung der Lenkwellenmittellinie 16 angeordnete, mit einer Länge 45, Breite 46 und einer Stärke 47 rechteckförmige Verstärkungsleiste 20 ist direkt an der Basis 21 unterhalb der mit einer Breite 48 und einer Länge 49 positionierten Ausnehmung 2 des oberen Teils 3 angebracht. Die Verstärkungsleiste 20 besitzt eine in Richtung der Länge 45 angebrachte Ausnehmung 50, insbesondere eine Längsnut, deren Breite 51 und Länge 52 gleich und/oder größer als die Länge 49 und Breite 48 der Ausnehmung 2 des Mantelrohres 1 sind.

Sich über die Länge 45 erstreckende gegenüberliegende und zueinander geneigte Seitenflächen 53 gemäß einem Winkel 54 sind an den Verlauf der Seitenschenkel 34 angepasst. Zwei an gegenüberliegenden endseitigen Stirnflächen 55 und 56 in einem Abstand 57 senkrecht zur Verstärkungsleiste 20 ausgerichtete Laschen 58 weisen eine Bohrung 59 mit einem Durchmesser 60 für die Aufnahme von Dämpfungsorganen 61, beispielsweise Elastomerdämpfer, Luftdämpfer oder Federdämpfer etc. auf. Natürlich können die Dämpfungsorgane 61 über alle möglichen Verbindungsarten, beispielsweise Kleben, Pressen, Klemmen, Nieten, etc. an die Laschen 58 angebracht werden. Die durch die Dämpfungsorgane 61 bestehende Endlagendämpfung trägt zur Schonung der Konstruktion bei und gibt zusätzlich auch einen ausreichenden Verstellweg vor.

Die Länge 52 der in der Verstärkungsleiste 20 angebrachten Ausnehmung 50 kann derart ausgeführt werden, dass die direkt unterhalb des Mantelrohres 1 angebrachten Laschen 58 unmittelbar fluchtend und/oder beabstandet am Anfang beziehungsweise Ende der im Mantelrohr 1 angebrachten Ausnehmung 2 positioniert sind. Möglich ist natürlich jede beliebige Anbringung, beispielsweise Nieten, Kleben, Schweißen etc. der Laschen 58 an der Verstärkungsleiste 20, an der die Konstruktion anzupassen ist. Die Verstärkungsleiste 20 kann auch als Zuschnittteil gefertigt werden, an dem die Laschen 58 anzubringen sind oder es werden überstehende und in Richtung der Lenkwellenmittellinie 16 weisende Laschen 58 parallel zur Symmetrieachse 27 positioniert. Eine weitere Ausführung besteht darin, dass der obere Teil 3 des Mantelrohres 1 das für die Laschen 58 erforderliche Material in Form von Ausklinkungen bei der Fertigung berücksichtigt und in einem anschließenden Umformvorgang 90° zur Oberfläche 17 des oberen Teils 3 ausgerichtet wird.

Der durch die Ausnehmung 2 im oberen Teil 3 geschwächte Querschnitt 30 wird durch die Anbringung der Verstärkungsleiste 20 zu einer robusten und biegesteifen Konstruktion bestehend aus dem oberen Teil 3 und dem unteren Teil 4 ausgebildet. Durch diese Ausführung ist es nicht erforderlich die gesamte Konstruktion robuster zu gestalten, was wiederum eine Gewichts- und Materialeinsparung bedeutet. Die Verstärkungsleiste 20 kann aus verschiedensten Materialien gefertigt werden, die eine entsprechende Festigkeit aufweisen, insbesondere Materialien wie Stähle, Kunststoffe aller Art oder glasfaserverstärkte Kunststoffe etc., die in Abstimmung mit einer dafür geeigneten Verbindungsmöglichkeit angewandt werden können.

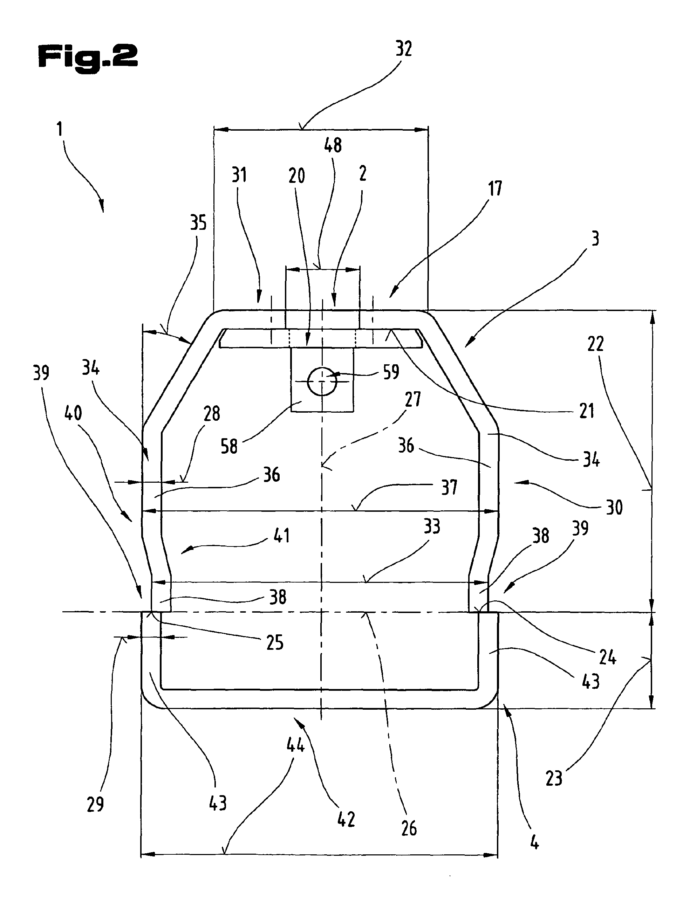

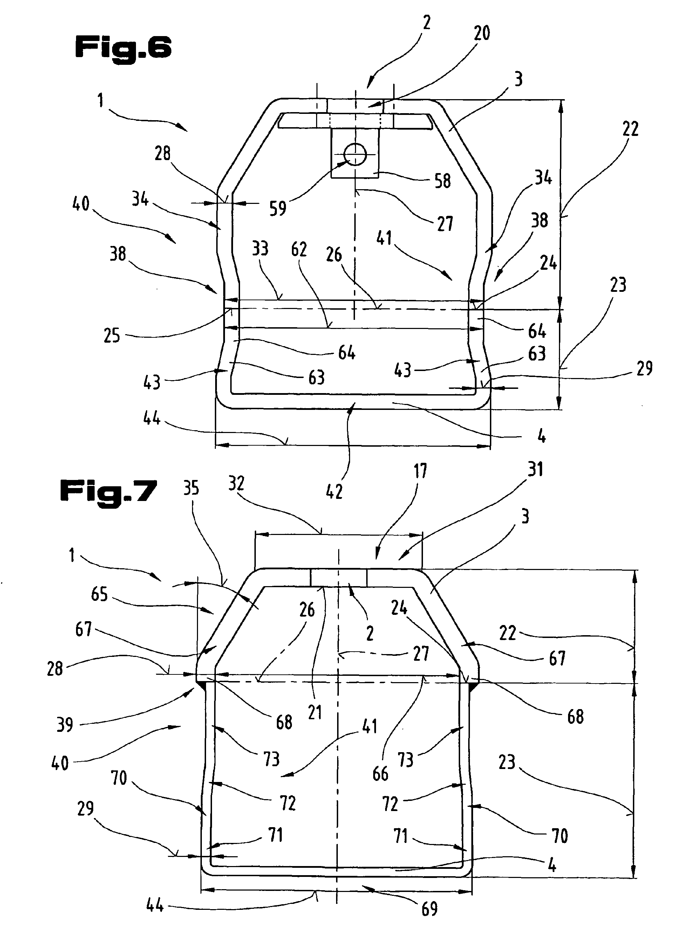

In Fig. 6 ist eine weitere Ausführungsvariante des Mantelrohres 1 gezeigt, das zweiteilig, bestehend aus dem mit der Ausnehmung 2 ausgestatteten oberen Teil 3 und dem gegenüberliegenden unteren Teil 4, die über ein Verbindungselement miteinander verbunden sind, ausgeführt ist. Die Ausbildung des oberen Teils 3 mit der Höhe 22, die bevorzugt größer als die Höhe 23 des unteren Teils 4 ausgeführt ist, entspricht der in der Fig. 2 dargestellten Ausführung. Der obere Teil 3 wird durch die Seitenschenkel 34 und der unterhalb der Ausnehmung 2 an der Basis 21 angeordneten Verstärkungsleiste 20 mit den Laschen 58 und Bohrungen 59 für Dämpfungsorgane 61 (in Fig. 6 nicht dargestellt) gebildet. Die im oberen Teil 3 ausgebildeten Seitenschenkel 34 mit der Wandstärke 28 weisen im Bereich der imaginären Teilungsebene 26 das Außenmaß 33 auf. Die von den Endteilen 38 der Seitenschenkel 34 ausgebildeten Stirnflächen 24 verlaufen deckungsgleich zu der senkrecht zur Symmetrieachse 27 orientierten imaginären Teilungsebene 26 und stellen die Kontaktstelle zum untergeordneten unteren Teil 4 dar. Der untere Teil 4 mit der Höhe 23 und der Wandstärke 29 bildet einen mit dem Außenmaß 44 in etwa U-förmigen Querschnitt 42 aus, dessen Seitenschenkel 43 sich in Richtung der Teilungsebene 26 auf das Außenmaß 62 verjüngen, was bei beispielsweise gleicher Wandstärke 28 und 29 zu einem glatten Übergang ohne Hohlkehle 39 zwischen dem oberen Teil 3 und dem unteren Teil 4 führt. Die von den Seitenschenkel 43 in Richtung der Teilungsebene 26 ausgebildeten Zwischenteile 63 verlaufen geneigt zueinander und schließen an einen parallel zur Symmetrieachse 27 angeordneten Endteil 64 mit seinen senkrecht zur Symmetrieachse 27 positionierten Stirnflächen 25 an. ,

Selbstverständlich ist es möglich, den oberen Teil 3 und/oder den unteren Teil 4 mit gleicher und/oder unterschiedlicher Wandstärke 28 und 29 auszustatten, was zu einer Überragung der Außenseite 40 und/oder Innenseite 41 im Bereich der imaginären Teilungsebene 26 führen kann.

In der Fig. 7 ist eine andere Ausführungsvariante des Mantelrohres 1 dargestellt, das zweiteilig, bestehend aus dem mit der Ausnehmung 2 ausgestatteten oberen Teil 3 und dem diesen gegenüberliegenden unteren Teil 4 ausgeführt ist. Der obere Teil 3 mit der Höhe 22 weist einen in etwa trapezförmigen Querschnitt 65 auf, wobei ein an der Oberkante 31 der Oberfläche 17 ausgebildetes Breitenmaß 32 kleiner ist, als ein parallel zum Breitenmaß 32 angeordnetes Breitenmaß 66. Die zwischen der Oberkante 31 des oberen Teiles 3 und der imaginären Teilungsebene 26 ausgebildeten Teile von Seitenschenkel 67 sind in Richtung der Höhe 22 geneigt zueinander angeordnet und erweitern sich mit zunehmendem Abstand von der Basis 21 gemäß dem Winkel 35 bis auf parallel zur Symmetrieachse 27 angeordnete Endteile 68 mit dem Breitenmaß 66.

Die von den Endteilen 68 des oberen Teils 3 ausgebildeten Stirnflächen 24 bilden eine parallel zur Oberfläche 17 verlaufende imaginäre Teilungsebene 26 aus, auf der die senkrecht stehende Symmetrieachse 27 angeordnet ist. Die zwischen einer Basis 69 des unteren Teils 4 und der imaginären Teilungsebene 26 ausgebildeten Teile von Seitenschenkel 70 sind in Richtung der Höhe 23 im Anfangsteil 71 parallel zur Symmetrieachse 27 verlaufend angeordnet und schließen an einen sich leicht verjüngenden Zwischenteil 72 an, dem zwei parallel zur Symmetrieachse 27 nachgeordnete Endteile 73 folgen.

Die vom oberen Teil 3 und dem unteren Teil 4 ausgebildeten Wandstärken 28 und 29 ergeben im Bereich der imaginären Teilungsebene 26 eine Überragung an der Außenseite 40 und/oder an der Innenseite 41. Die Wandstärke 29 kann kleiner und/oder gleich und/oder größer als die Wandstärke 28 des oberen Teiles 3 ausgeführt sein. Dementsprechend gilt natürlich auch eine Variierung der Wandstärke 29. Wie in der Fig. 7 dargestellt wird, ergibt sich bei einer unterschiedlichen Wandstärke 28 oder 29 eine Hohlkehle 39 bzw. eine Fügestelle, die eine Erleichterung der Montagearbeiten erlaubt. Durch die Abstimmung der Wandstärke 28 des mit der Ausnehmung 2 geschwächten oberen Teils 3 ist die Verstärkungsleiste 20 nicht mehr erforderlich.

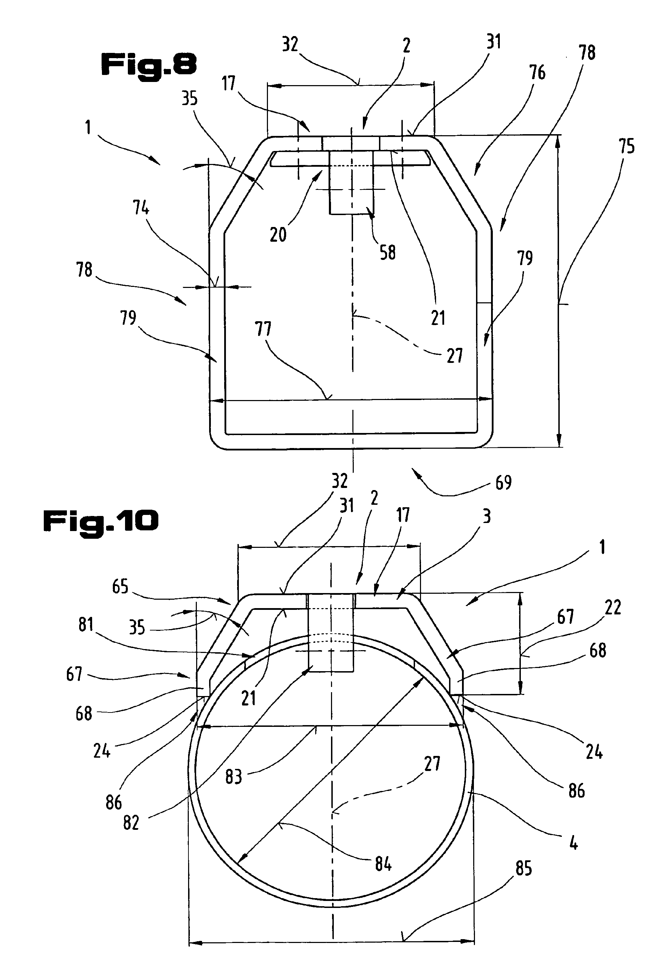

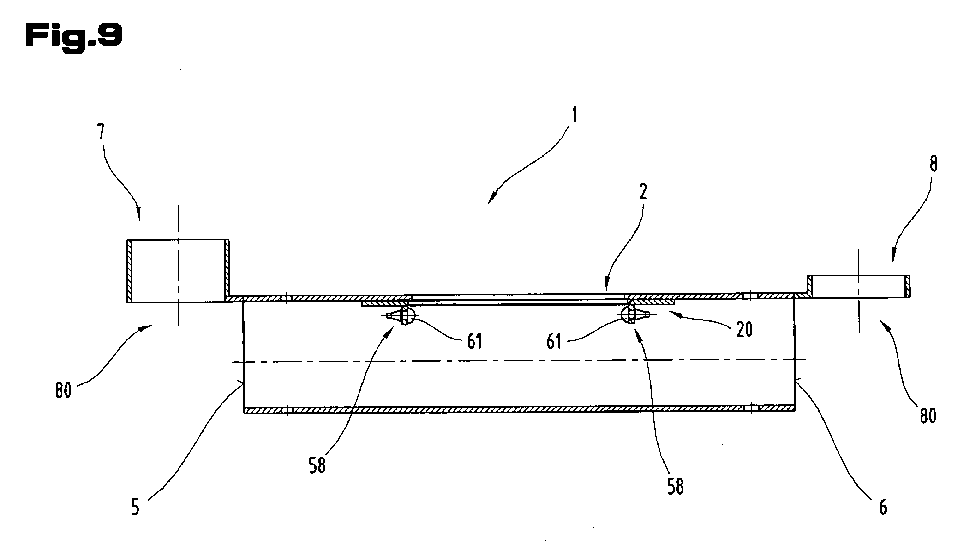

In den Fig. 8 und 9 ist eine weitere Ausführungsvariante des Mantelrohres 1 dargestellt. Das profilierte einteilige geschlossene Mantelrohr 1 mit der unterhalb der Ausnehmung 2 angeordneten Verstärkungsleiste 20 und den für die Aufnahme der Dämpfungsorgane 61 angeordneten Laschen 58 wird mit einer über den ganzen Umfang gleich bleibenden Wandstärke 74 ausgeführt. Die genauere Ausführung und Anbringung der Verstärkungsleiste 20 wurde bereits in den zuvor angeführten Figuren beschrieben.

Das Mantelrohr 1 mit einer Höhe 75 weist einen in etwa U-förmigen oder trapezförmigen Querschnitt 76 auf, wobei ein an einer Oberkante 31 der Oberfläche 17 ausgebildetes Breitenmaß 32 kleiner ist, als ein parallel zum Breitenmaß 32 angeordnetes Außenmaß 77. Die zwischen der Oberkante 31 und der Basis 69 ausgebildeten Teile von Seitenschenkel 78 sind in Richtung der Höhe 75 geneigt zueinander angeordnet und erweitern sich mit zunehmendem Abstand von der Basis 21 gemäß dem Winkel 35 bis auf zwei parallel zur Symmetrieachse 27 positionierte Endteile 79 mit dem Außenmaß 77.

Die an den beiden gegenüberliegenden endseitigen Stirnflächen 5 und 6 angeformten, fugenlosen rohrförmigen Lageraufnahmestellen 7 und 8 können einteilig mit dem Mantelrohr 1 gefertigt werden, deren überstehende Laschen 80 durch einen Umformvorgang, insbesondere Biegen und Pressen, senkrecht zur Symmetrieachse 27 angekantet werden. Anderenfalls können die tiefgezogenen Lageraufnahmestellen 7 und 8 auch mit einem Verbindungselement mit den Stirnflächen 5, 6 verbunden werden. Durch die Fertigung eines einstückigen Mantelrohres 1 werden die Montagearbeiten wesentlich vereinfacht, die in weiterem Sinne zu Senkungen der Herstellkosten führen.

In der Fig. 10 ist eine weitere Ausführungsvariante des Mantelrohres 1 dargestellt. Das Mantelrohr 1 bestehend aus dem oberen Teil 3 und dem unteren Teil 4 ist derart ausgeführt, dass der untere Teil 4 eine Ausnehmung 81 besitzt und diesem der obere Teil 3 mit zwei Laschen 82 für die Anbringung der Dämpfungsorgane 61 (in Fig. 10 nicht dargestellt) übergeordnet ist.

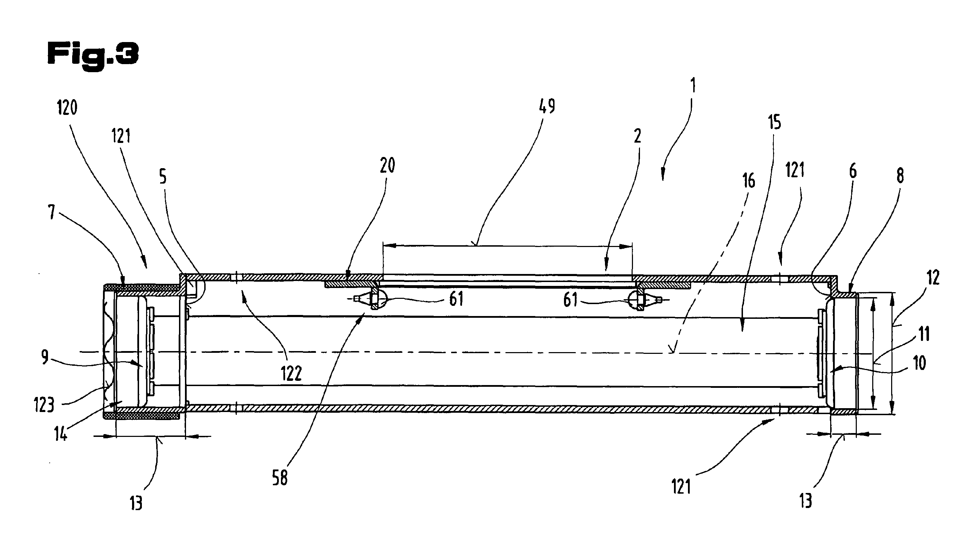

Der obere Teil 3 mit der Höhe 22 und der Ausnehmung 2 weist einen in etwa U-förmigen oder trapezförmigen Querschnitt 65 auf, wobei ein an einer Oberkante 31 der Oberfläche 17 ausgebildetes Breitenmaß 32 kleiner ist, als ein parallel zum Breitenmaß 32 angeordnetes Außenmaß 83. Die zwischen der Oberkante 31 und den Stirnflächen 24 ausgebildeten Teile vom Seitenschenkel 67 sind in Richtung der Höhe 22 geneigt zueinander angeordnet und erweitern sich mit zunehmendem Abstand von der Basis 21 gemäß dem Winkel 35 bis auf einen parallel zur Symmetrieachse 27 angeordneten Endteil 68 mit dem Außenmaß 83. Der rohrförmig als fugenlos gefertigte, insbesondere gezogene oder gerollte etc. rohrförmige untere Teil 4 mit einem Innendurchmesser 84 und einem Außendurchmesser 85 ist mit der parallel zur Lenkwellenmittellinie 16 (siehe Fig. 3) verlaufenden Ausnehmung 81 ausgestattet. Bevorzugt verläuft das Außenmaß 83 tangential zum Innendurchmesser 84. Der obere Teil 3 wird mit dem unteren Teil 4 an einer Hohlkehle 86 über ein Verbindungselement miteinander verbunden, insbesondere verschweißt, geklebt etc.

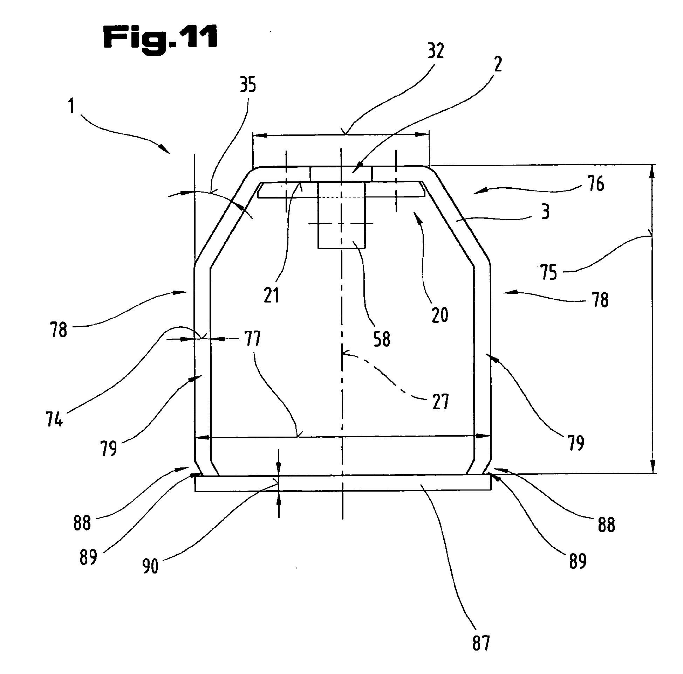

In der Fig. 11 ist eine weitere Ausführungsvariante des Mantelrohres 1 dargestellt, das zweiteilig, bestehend aus dem mit der Ausnehmung 2 ausgestatteten oberen Teil 3 und einen diesem untergeordneten rechteckig, bandförmig etc. ausgeführten Einzelteil 87 ausgeführt ist. Der obere Teil 3 wird durch die Seitenschenkel 78 und der unterhalb der Ausnehmung 2 an der Basis 21 angeordneten Verstärkungsleiste 20 mit den Laschen 58 zur Aufnahme der Dämpfungsorgane 61 (nicht dargestellt) gebildet. Der obere Teil 3 mit der Höhe 75 weist einen in etwa U-förmigen oder trapezförmigen Querschnitt 76 auf, wobei das an der Oberkante 31 der Oberfläche 17 ausgebildete Breitenmaß 32 kleiner ist, als das parallel zum Breitenmaß 32 angeordnete Außenmaß 77. Die zwischen der Oberkante 31 und dem Einzelteil 87 ausgebildeten Teile vom Seitenschenkel 78 sind in Richtung der Höhe 75 geneigt zueinander angeordnet und erweitern sich mit zunehmendem Abstand von der Basis 21 gemäß dem Winkel 35 bis auf die parallel zur Symmetrieachse 27 angeordneten Zwischenteile 79 mit dem Außenmaß 77, an dem ein sich verjüngender Endteil 88 anschließt. Die Verjüngung des Endteiles 88 erzeugt eine Hohlkehle 89, die für die Herstellung der Verbindung zwischen dem oberen Teil 3 und dem Einzelteil 87 von Vorteil ist, da die Montage wesentlich erleichtert wird. Eine Wandstärke 90 des Einzelteiles 87 ist kleiner oder gleich oder größer als die Wandstärke 74 der Seitenschenkel 78 ausgeführt.

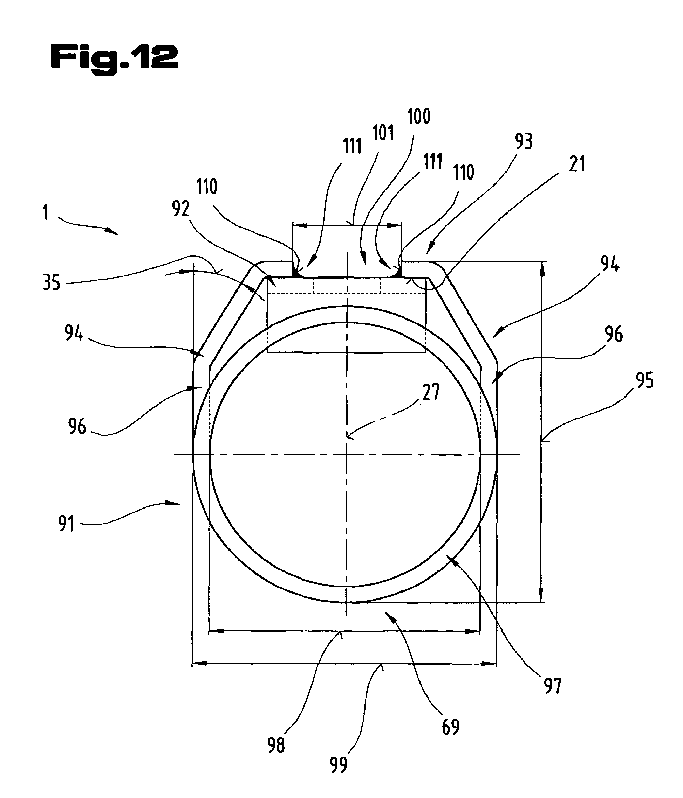

In den Fig. 12 bis 14 ist eine weitere Ausführungsvariante des Mantelrohres 1 dargestellt, bestehend aus einem Formkörper 91 und einer an der Unterkante 21 rechteckförmig angebrachten Leiste 92. Die zwischen einer parallel zu einer Lenkwellenmittellinie16 (siehe Fig. 3) angeordnete Oberseite 93 und der Basis 69 ausgebildeten Teile vom Seitenschenkel 94 in Richtung der Höhe 95 sind geneigt zueinander angeordnet und erweitern sich mit zunehmendem Abstand von der Oberseite 93 gemäß dem Winkel 35 und schließt an einen parallel zur Symmetrieachse 27 angeordneten Zwischenteil 96 an, dem ein halbkreisförmiger Endteil 97 mit einem Innendurchmesser 98 und einem Außendurchmesser 99 nachgeordnet ist. An der Oberseite 93 des Mantelrohres 1 ist ein parallel zu der Lenkwellenmittellinie 16 verlaufender Öffnungsschlitz 100 mit einer gleich bleibenden Breite 101 und einer Länge 102 angeordnet. Die parallel zur Lenkwellenmittellinie 16 und direkt unterhalb des Öffnungsschlitzes 100 angeordnete Leiste 92 mit einer Breite 103 und einer der Länge 102 entsprechende Länge 104 ist mit der Ausnehmung 50 mit der Breite 51 und der Länge 52 versehen. Die Breite 103 der Leiste 92 überragt dabei die von dem Formkörper 91 ausgebildete Breite 101 des Öffnungsschlitzes 100. Durch den mit der Breite 101 ausgebildeten Öffnungsschlitz 100 wird eine gute Zugängigkeit für Montagearbeiten gegeben. Die sich über die gesamte Länge 104 des Mantelrohres 1 erstreckende Leiste 92 besitzt an den beiden gegenüberliegenden einseitigen Stirnflächen 105 und 106 senkrecht angeordnete Laschen 107 mit einer Höhe 108, die die Kontaktstelle zwischen den Lageraufnahmestellen 7 und 8 und den mit der Leiste 92 verbundenen Formkörper 91 darstellt. Die in einem Abstand 109 senkrecht stehenden und parallel zu den endseitigen gegenüberliegenden Laschen 107 angeordneten Laschen 59 mit der Bohrung 59 und dem Durchmesser 60 dient der Aufnahme der Dämpfungsorgane 61 (nicht dargestellt). Die mit der Breite 101 beanstandeten und einander zugewandten Stirnflächen 110 des Formkörpers 91 sind parallel zu der Symmetrieachse 27 angeordnet und bilden eine Hohlkehle 111.

Die Leiste 92 kann einen rechteckigen einstückigen Zuschnittteil darstellen, bei dem die Laschen 58 und 107 mittels einem Umformvorgang, insbesondere Biegen, Pressen etc., gefertigt werden. Möglich ist natürlich auch ein Anfügen der Laschen 58 und 107 an einen rechteckigen Zuschnittteil beispielsweise durch Kleben, Nieten, Schrauben, Schweißen, insbesondere Laserschweißen.

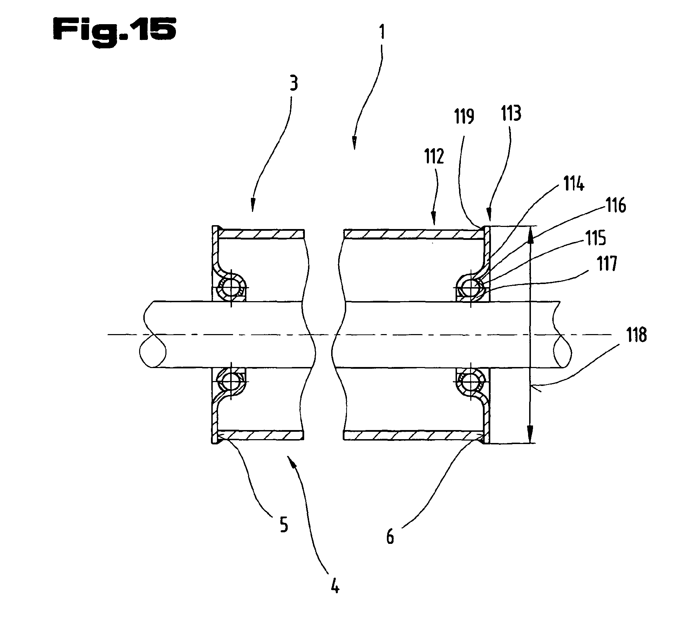

In der Fig. 15 ist eine andere Variante einer von dem oberen und unteren Teil 3, 4 des Mantelrohres 1 ausgebildeten Lageraufnahmestelle 112 dargestellt. An den beiden gegenüberliegenden endseitigen Stirnflächen 5 und 6 ist eine die Lagereinrichtung 113 bildende Lageraufnahmestelle 112 ausgebildet, die aus einem Außenring 114, einem Käfig 115 und die im Käfig 115 befindlichen Wälzkörper 116 und einem Innenring 117 besteht. Der Außenring 114 wird direkt an der Stirnfläche 5 und 6 angebracht, dessen Außendurchmesser 118 zumindest teilweise den oberen Teil 3 und den unteren Teil 4 überragt und der mit einem Verbindungselement 119, beispielsweise Schrauben, Kleben, Nieten, Schweißen, insbesondere Laserschweißen, mit den übereinander gesetzten Teilen 3, 4 verbunden wird. Durch diese Maßnahme sind erhebliche Verbesserungen der Einhaltung der Toleranzgrenzen zu verzeichnen, da ein Teil und dadurch mehrere erforderliche Arbeitsgänge vermieden werden können, was zu einer Senkung der Herstellkosten führt.

Dieser Teil erhält durch partielle Härtung im Laufbereich der Wälzkörper 117 seine Härte und eine damit verbundene Erhöhung der Lebensdauer und eine außerhalb des Laufbereiches weiche und kohlenstoffarme Materialzone, die ein technisch störungsfreies Schweißen, insbesondere Laserschweißen, ermöglicht.

Möglich ist natürlich auch die Herstellung der Lageraufnahmestellen 112 durch einen einstückigen Teil, beispielsweise einen Tiefziehteil etc., der bereits den Außenring 114 integriert hat und der in einem anschließenden Umformvorgang, beispielsweise Biegen, Pressen, etc. senkrecht zur Lenkwellenmittellinie 16 positioniert wird. Dazu wird ein Werkstoff verwendet, der eine für das Umformverfahren, insbesondere Tiefziehen, Abstrecken etc., ausreichende Zähigkeit sowie einen für das Schweißverfahren niedrigen Kohlenstoffgehalt aufweist und auf den sich in einem weiteren Arbeitsgang ein Härteverfahren, insbesondere Einsatzhärten, Nitrierhärten, etc., anwenden lässt.

Zusätzlich ist es bei allen angeführten Ausführungsvarianten und wie in Fig. 3 dargestellt möglich, die in Richtung der Fahrerkabine weisende endseitige Stirnfläche 5 oder 6 mit einer aus Kunststoff, Metall etc. gefertigten Hülse 120 zur Aufnahme von nicht weiters dargestellten Armaturen, insbesondere Blinkerarmaturen, Scheibenwischerarmaturen etc., auszustatten.

Es ist bei jeder beschriebenen Ausführungsvariante wahlweise möglich, die Verbindung zumindest einer der fugenlosen Lageraufnahmestelle 7 und/oder 8 mit dem Mantelrohr 1 und/oder die Verbindung des oberen Teils 3 mit dem unteren Teil 4 und/oder die Verbindung der Verstärkungsleiste 20 mit zumindest einem dieser beiden Teile 3 oder 4 beispielsweise über Nieten und/oder Pressen und/oder Kleben und/oder Löten und/oder Schweißen, insbesondere Laserschweißen, etc. herzustellen, da das Laserschweißen bzw. das Löten nur eine örtliche, minimale Wärmeeinbringung erzeugt und keine weiteren Toleranzenabweichungen ergibt. Natürlich können auch alle anderen aus dem Stand der Technik bekannten oder neu entwickelten Verbindungselemente zur Herstellung einer Verbindung herangezogen werden. Das Löten kann ohne oder gegebenenfalls mit einem Zusatzwerkstoff durchgeführt werden.

Wie aus der Fig. 3 ersichtlich, besitzt das Mantelrohr 1 mehrere Schlitze 121 und Bohrungen 122, die eine Positionierung und Zentrierung in der Schweißvorrichtung, Biegevorrichtung etc. zulassen. Eine in Richtung der Fahrerkabine weisende fugenlose Lageraufnahmestelle 7 oder 8 mit dem integrierten Lager 9 oder 10 besitzt eine am Käfig adaptierte Schlangenfeder 123, über die die Toleranzen der Fertigung in axialer Richtung ausgeglichen werden und gleichzeitig die Lenkwelle 15 zwischen den beiden Lageraufnahmestellen 7 und 8 geringfügig vorgespannt wird.

### Verfahren zur Herstellung und Montage:

Ein gegebenenfalls rechteckförmiger und/oder ebenflächiger Zuschnittteil wird in einem Biegevorgang bzw. Abkantvorgang in einer zur Längserstreckung des Zuschnittteiles senkrechten Ebene ein mehreckiges Profil ausgebildet, das den oberen Teil 3 und den unteren Teil 4 bildet. Durch die an der Basis 21 des oberen Teils 3 angebrachten Bohrungen 18, 19 kann die unterhalb als Zuschnitt- und Biegeteil gefertigte Verstärkungsleiste 20 beispielsweise durch eine Laserschweißverbindung angebracht, zweckmäßig durchgeschweißt werden. Für die genaue Positionierung bzw. Zentrierung während der Montage- und Fertigungsarbeiten sind am oberen Teil 3 und am unteren Teil 4 mehreren Bohrungen 122 und Schlitze 121 angebracht. Die von der Schweißvorrichtung vorgegebene Position der oberen und unteren Teile 3 und 4 ermöglicht das exakte Aufeinandersetzen ohne nennenswerte Abweichungen von Toleranzen, wobei die von dem oberen Teil 3 ausgebildeten Seitenschenkel 34 und die vom unteren Teil 4 ausgebildeten Seitenschenkel 43 jeweils der Basis 21 bzw. 69 gegenüberliegenden Seiten eine zur Teilungsebene 26 planparallele Stirnfläche 24, 25 ausbildet, die als Fügestelle, insbesondere für den Laserschweißvorgang, dient.

Nachdem die Verstärkungsleiste 20 bevorzugt an die Basis 21 unterhalb der Ausnehmung 2 des oberen Teiles 3 verschweißt worden ist, kann der obere Teil 3 mit dem unteren Teil 4 an der Fügestelle verbunden werden und ergibt das Mantelohr 1, an dem an den beiden gegenüberliegenden Stirnflächen 5, 6 zwei Lageraufnahmestellen 7, 8 adaptiert sind, die beispielsweise einstückig mit dem oberen Teil 3 als Tiefziehteil hergestellt werden und in einem anschließenden Abkantvorgang senkrecht zu einer von der Lenkwelle 15 ausgebildeten Lenkwellenmittellinie 16 ausgerichtet und mit diesem Teil 3 verbunden wird. Die Lageraufnahmestellen 7, 8 können natürlich auch als eigenständige Drehteile, Zieh- oder Rollteile an eine Tragplatte senkrecht positioniert werden, die wiederum mit der Stirnfläche 5, 6 verbunden ist.

Als nächster Montageschritt wird eine dem Lenkrad näher gelegene Lageraufnahmestelle 7 mit einem aus dem Stand der Technik bekannten, mit einer Schlangenfeder 123 ausgestatteten Lager 9 beispielsweise eingepresst, dem eine ebenfalls bereits bekannte Lenkwelle 15 eingeschoben wird und durch das nachgeordnete Einpressen des Lagers 10 in die Lageraufnahmestelle 8 die Lenkwelle 15 lagert. Das Anpressen eines nicht in den Figuren dargestellten Befestigungselementes an die Schlangenfeder 123 wird durch das in Richtung der Längserstreckung axial auftretende Spiel der Lenkwelle 15 ausgeglichen.

Wie in einer anderen Ausführungsvariante vorher beschrieben wurde, ist die Lageraufnahmestelle 7,8 bereits mit einem Außenring 114 eines vorzugsweise zu verwendenden Kugellagers als Tiefziehteil oder als eigenständige Baueinheit gefertigt, die an das Mantelrohr 1 angeordnet ist. Das Einschweißen des vormontierten, befetteten Kugellagers erfolgt als einer der letzten Arbeitsgänge, daher mit bereits montierter Lenkwelle 15, wodurch die Konstruktion spannungsfrei bleibt und alle Toleranzen ausgeglichen werden können. Die bei der Fertigung auftretenden Summentoleranzen und Fertigungsungenauigkeiten der beteiligten Komponenten sind dann unbedeutend.

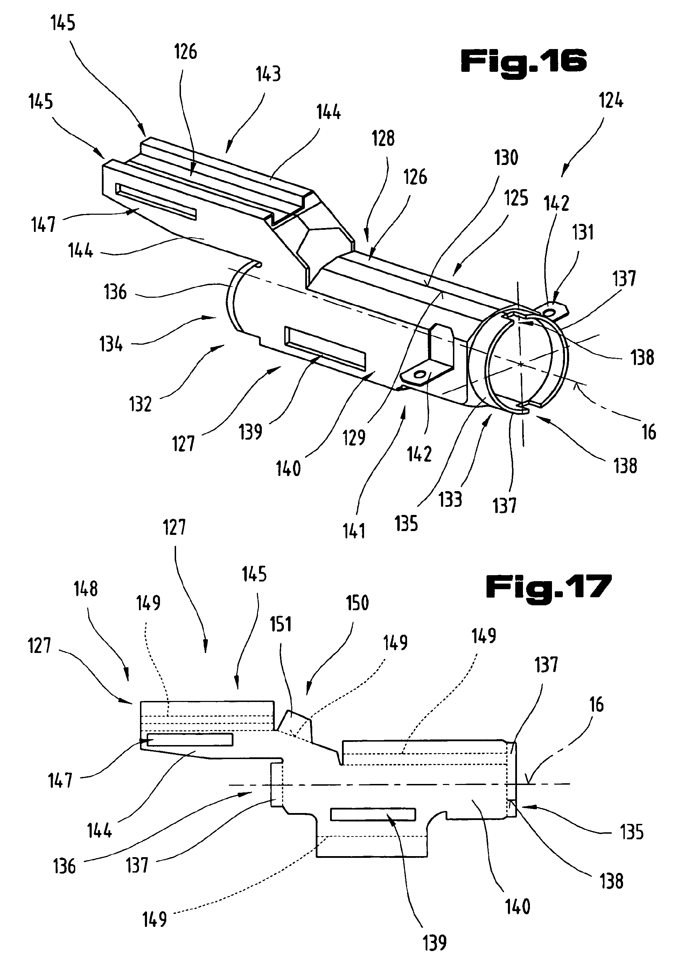

In den gemeinsam beschriebenen Fig. 16 bis 19 sind weitere Ausführungsvarianten eines Lagerungskastens 124 mit einer anderen Ausführung eines Mantelrohres 125 in teilweise perspektivischer Ansicht gezeigt. Das zweckmäßig mehrteilig ausgebildete Mantelrohr 125 weist zumindest zwei in Verbindungsbereichen 126 über ein Verbindungselement verbundene halbschalenförmige Teile 127, 128 auf. Stumpf aneinander gelegte Längsstirnflächen 129, 130 bilden den Verbindungsbereich 126 aus, der in einer mit einer senkrechten Längsmittelebene des Lagerungskastens 124 fluchtenden Ebene verläuft. Das Mantelrohr 125 bzw. deren quer zur Längsrichtung einander gegenüberliegenden, miteinander zu verbindenden Teile 127, 128 weist bzw. weisen zwischen an distalen Endbereichen 131, 132 ausgebildeten Aufnahmebereichen 133, 134 für noch näher zu beschreibende Lagerelemente einen mehreckigen Querschnitt auf. Die Lageraufnahmestellen 135, 136 bildenden Aufnahmebereiche 133, 134 werden in den distalen Endbereichen 131, 132 einstückig angeformt, wobei jeder der halbschalenförmigen Teile 127, 128 einen etwa halbkreisförmigen Lagerteil 137 ausbildet. Die an ihren im Verbindungsbereich 125 aneinander stoßenden Längsstirnflächen 129, 130 der Teile 127, 128 werden über das Verbindungselement miteinander verbunden.

Zwei oder mehrere miteinander zu einer kreisringförmigen Lageraufnahmestelle 135, 136 verbundene Lagerteile 137 weisen jeder für sich im Verbindungsbereich 126 eine Materialrücksetzung 138 auf. Die in Längsrichtung des Lagerungskastens 124 verlaufende, etwa U-förmige, sich über einen Teil einer Breite der Lageraufnahmestelle 135, 136 erstreckende Materialrücksetzung 138 ermöglicht vor allem, dass der durch das Umformen entstehende Grad zu keiner unzulässigen Verformung der Längsstirnflächen 129, 130 im Verbindungsbereich 125 während der Verbindungsherstellung führt und dadurch eine hohe Fertigungsgenauigkeit der Lageraufnahmestellen 135, 136 ermöglicht ist.

Einer der beiden trapezförmig ausgebildeten schalenförmigen Teile 127; 128 weist im Längsverlauf eine in zur Längsmittelachse 16 der Lenkwelle 15 parallel verlaufende, einer Fixiervorrichtung zugeordnete Ausnehmung 139 auf. Ein Teilbereich eines in einer zu der vertikalen Längsmittelebene parallel verlaufenden Ebene liegenden Seitenschenkels 140 ist, um die durch die Anordnung der schlitzförmigen Ausnehmung 139 verursachende Abschwächung der Steifigkeit zu vermeiden, mehrmals abgekantet, so dass Teile der Seitenschenkel 140 in einem Versteifungsbereich 141 in eine zumindest bereichsweise überdeckenden Lage verbracht werden. Wie aus den Fig. 16 bis 18 ersichtlich, ist das Mantelrohr 125 des Lagerungskastens 124 mit Befestigungslaschen 142 für die Befestigung von nicht weiters dargestellten Anbauteilen versehen, die einstückig am Mantelrohr 125 angeformt sind und die zweckmäßig in einer zu der vertikalen Längsmittelebene senkrecht ausgerichteten horizontalen Längsmittelebene parallel verlaufenden Ebene ausgerichtet sind. In einem der Endbereiche 131; 132 schließt ein jeweils durch die beiden schalenförmigen Teile 127, 128 ausgebildeter und einstückig an diese angeformter rahmenförmiger Tragarm 143 an. Die vertikale Längsmittelebene verläuft durch die durch die stumpf aneinander stoßenden Längsstirnflächen 129, 130 gebildeten Verbindungsbereiche 126, wobei die vertikale Längsmittelebene des Tragarmes 143 fluchtend mit der vertikalen Längsmittelebene des Mantelrohres 125 verläuft. Der Tragrahmen 143 weist zweckmäßig in einer zu seiner Längserstreckung senkrechten Ebene einen mehreckigen Querschnitt auf. Quer zur Längsrichtung des Tragarmes 143 angeordnete Schenkel 144 von miteinander zu verbindenden Tragarmteilen 145 verlaufen ebenflächig zu zumindest einem der parallel zu der vertikalen Längsmittelebene verlaufenden Teile der Seitenschenkel 140. Die sich zwischen den um ein Breitenmaß 146 voneinander distanzierten Schenkel 144 erstreckenden Tragarmteile 145 sind mehrmals abgekantet und bilden im wesentlichen in einer zu deren Längserstreckung senkrechten Ebene einen etwa U-förmigen Querschnittsverlauf aus.

An den gegenüberliegenden Schenkel 144 ist jeweils eine in zur Längsmittelachse 16 paralleler Richtung und in der gleichen Ebene verlaufende Ausnehmung 147 angeordnet, die jeweils parallel zu der Ausnehmung 139 verläuft. Ein nicht weiters dargestellter, die schlitzförmige Ausnehmung 147 durchsetzender, mit einer ortsfest an der Karosserie des Fahrzeuges angeordneten Halterung verbundener Bolzen bildet eine Schwenkachse, um die der die Lenkwelle 15 aufnehmende Lagerungskasten 124 in einer zu seiner Längserstreckung radialen Richtung verschwenkbar gelagert ist.

Aus einem flächigen Zuschnitt- und/oder Stanz- und/oder Biegeteil 148 - wie in der Fig. 17 dargestellt ist - wird einer der schalenförmigen Teile 127; 128 gebildet. Dieser wird durch zwei das Mantelrohr 125 mit den Lageraufnahmestellen 135, 136 und den Tragarmteil 145 bildenden Teilbereiche gebildet. Der einteilige Zuschnitt- und/oder Stanz- und/oder Biegeteil 148 wird mit den in Längsrichtung der Längsmittelachse 16 parallel verlaufenden Ausnehmungen 139, 147 versehen und nach dem Zuschneiden und/oder Stanzen mittels eines Umformverfahrens, wie beispielsweise Abkanten, Pressen etc., entlang seiner - wie in strichlierten Linien dargestellt - Biegelinien 149 abgekantet. Die zur Bildung des Mantelrohres 125 und des Tragarmteiles 145 ausgebildeten Biegelinien 149 verlaufen bevorzugt parallel zu der Längsmittelachse 16, wohingegen die Biegelinien 149 zur Bildung der Lageraufnahmestellen 135, 136 senkrecht auf die Längsmittelachse 16 verlaufend ausgebildet sind. Zur Versteifung eines Übergangsbereiches 150 zwischen dem Mantelrohr 125 und dem Tragarm 143 sind zwischen diesen flächige Versteifungselemente 151 vorgesehen. Der Zuschnitt- und/oder Stanz-und/oder Biegeteil 148 weist zweckmäßig über die gesamte Länge und/oder Breite eine gleiche Wandstärke, die zwischen 1 mm und 5 mm, insbesondere zwischen 1,5 und 3,5 mm, beispielsweise 2 mm, beträgt, auf.

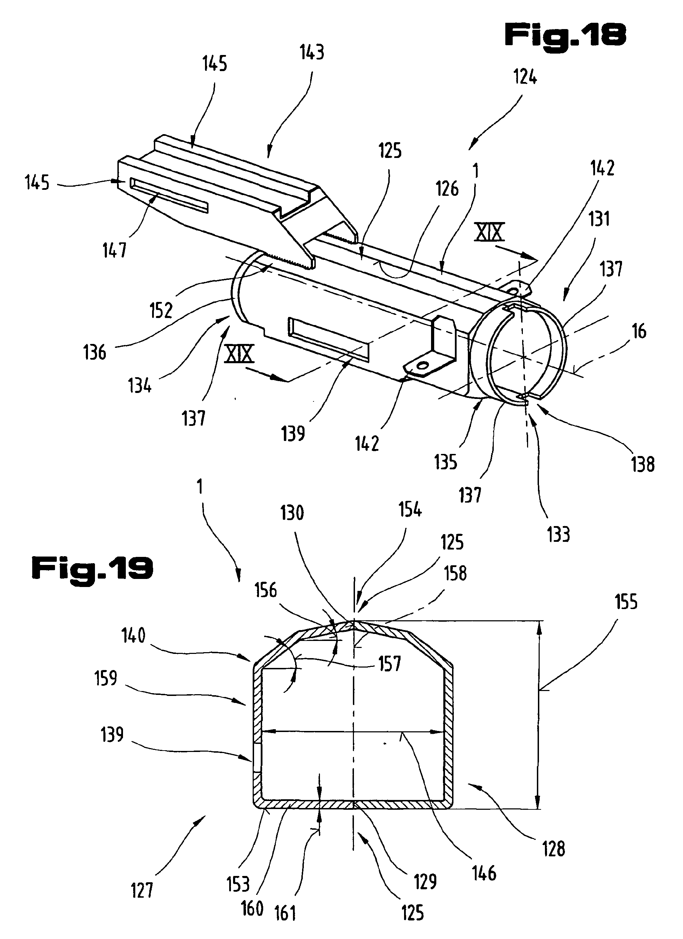

Natürlich besteht auch die Möglichkeit, wie in Fig. 18 dargestellt, den rahmenförmigen Tragarm 143 bzw. die diesen bildenden Tragarmteile 145 über ein Verbindungselement 152 mit dem Mantelrohr 125 form- und/oder kraftschlüssig zu verbinden. Selbstverständlich kann der Tragarm 143 auch als einteiliger Zuschnitt- und/oder Stanz- und/oder Biegeteil 148 hergestellt werden.

In der Fig. 19 ist das durch zwei symmetrisch ausgebildete schalenförmige Teile 127, 128 gebildete Mantelrohr 125 in Stimansicht geschnitten dargestellt. Die zwischen einer Basis 153 und einem Scheitel 154 des ersten Teiles 127 ausgebildeten Teile von Seitenschenkel 140 sind in Richtung einer Höhe 155 geneigt zueinander verlaufend angeordnet und erweitern sich mit zunehmendem Abstand von dem Scheitel 154 - gemäß Winkel 156, 157 - bis zu einem parallel zu einer Symmetrieachse 158 angeordneten Zwischenteil 159 mit dem Breitenmaß 146. Natürlich kann, wie nicht weiters dargestellt, auch ein an diesem anschließender Bereich mit einer die Festigkeit erhöhenden Aufweitung und/oder Verjüngung versehen werden. Dem schließt sich ein parallel zur Längsmittelachse 16 verlaufender, die Basis 153 bildender Endteil 160 an, dessen stirnseitige Längsstirnfläche 129 deckungsgleich mit der Symmetrieachse 158 verläuft. Im Bereich des Scheitels 154 wird von einem geneigten Teil des Seitenschenkels 140 die mit der Symmetrieachse 158 deckungsgleich bzw. fluchtend verlaufende Längsstirnfläche 129 ausgebildet. Die in zur Längsmittelachse 16 parallel verlaufende Ausnehmung 139 ist zweckmäßig in dem Zwischenteil 159 des ersten Teiles 127 angeordnet.

Der dem ersten Teil 127 gegenüberliegende weitere Teil 128 weist zwischen dem Scheitel 154 und der Basis 153 in Richtung der Höhe 155 geneigt zueinander verlaufend angeordnete Teile von Seitenschenkel auf, die sich mit zunehmendem Abstand von dem Scheitel 154 - gemäß den Winkeln 156, 157 - bis zu dem parallel zur Symmetrieachse 158 angeordneten Zwischenteil 159 erstrecken. Dem schließt sich der senkrecht zur Symmetrieachse 158 nachgeordnete, die Basis 153 bildende Endteil 160 an. Die Längsstirnflächen 130 des Endteiles 160 und des Teiles des Seitenschenkels 140 im Bereich des Scheitels 154 des Teiles 128 werden an die Längsstirnflächen 129 des gegenüberliegenden ersten Teiles 127 stumpf aneinandergelegt und in dem dadurch gebildeten Verbindungsbereich 126 über ein form- und/oder kraftschlüssiges Verbindungselement miteinander verbunden. Der erste Teil 127 und der weitere Teil 128 weisen zweckmäßig eine gleiche Wandstärke 161 über den gesamten Querschnitt auf. Durch das Umformen wird ein Teilbereich, zweckmäßig die gegenüberliegenden Endbereiche 131, 132 der einen mehreckigen Querschnitt aufweisenden Teile 127, 128 zu einem halbkreisförmigen Lagerteil 137 ausgebildet.

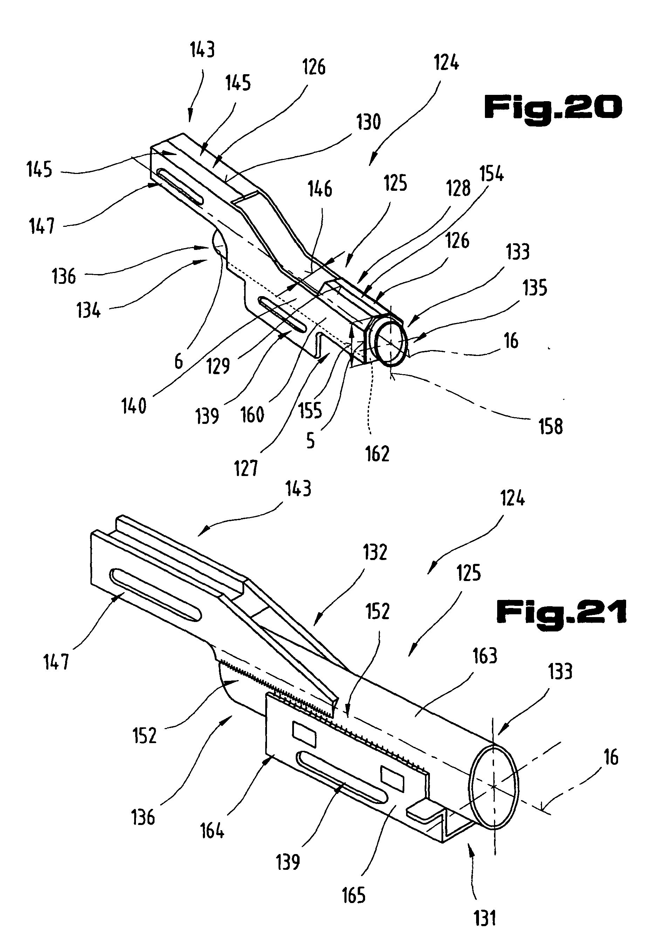

In der Fig. 20 ist eine andere Ausführungsvariante eines Lagerungskastens 124 in perspektivischer Ansicht dargestellt. Dieser umfasst das Mantelrohr 125 mit den Aufnahmebereichen 133, 134 bzw. die diese bildenden Lageraufnahmestellen 135, 136 und die mit den schalenförmigen Teilen 127, 128 einstückig angeformten, einen Tragarm 143 bildenden Tragarmteile 145 sowie eine flächige Tragplatte 162. Die symmetrisch ausgebildeten Teile 127, 128 weisen zwischen dem Scheitel 154 und dem vorkragenden Endteil 160 in Richtung der Höhe 155 geneigt zueinander verlaufend angeordnete Teile von Seitenschenkel auf, die sich mit zunehmendem Abstand von dem Scheitel 154 - gemäß dem Winkel 156 - bis zu dem parallel zur Symmetrieachse 158 angeordneten Endteil 160 erstrecken. Die Längsstirnflächen 130 des Endteiles 160 und des Teiles des Seitenschenkels 140 im Bereich des Scheitels 154 des Teiles 128 werden an die Längsstirnflächen 129 des gegenüberliegenden ersten Teiles 127 stumpf aneinandergelegt und in dem dadurch gebildeten Verbindungsbereich 126 über ein form- und/oder kraftschlüssiges Verbindungselement miteinander verbunden. Die die Lageraufnahmestellen 135, 136 bildende Tragplatte 162 wird aus einem streifenförmigen Zuschnitt- und/oder Stanz- und/oder Biegeteil gebildet, wobei vorerst die Lageraufnahmestellen 135, 136 gefertigt werden. Im Anschluss daran werden diese in einer zur Längsachse senkrechten Richtung verlaufenden Achse abgekantet. Die sich über die Länge und über das Breitenmaß 146 erstreckende Tragplatte 162 wird mit dessen gegenüberliegenden, parallel zur Längsmittelachse 16 und parallel zueinander verlaufenden Längsseitenflächen mit den Seitenschenkeln 140 kraft-und/oder formschlüssig verbunden. Die die Aufnahmebereiche 133, 134 bildenden Lageraufnahmestellen 135, 136 werden durch fugenlose, geschlossene Lagerringe gebildet. Zweckmäßig weist die streifenförmige Tragplatte 162 eine zu den Teilen 127, 128 des Mantelrohres 125 und der Tragarmteile 145 größere Wandstärke auf. Eine Breite der Tragplatte 162 ist zumindest geringfügig kleiner bemessen als ein Breitenmaß 146 zwischen den gegenüberliegenden Endteilen 160 der Seitenschenkel 140. Die Teile 127, 128 sind über ein Verbindungselement mit der Tragplatte 162 zumindest bereichsweise verbunden.

Die in den Tragarmteilen 145 angeordneten schlitzförmigen Ausnehmungen 147 verlaufen jeweils parallel zueinander und parallel zu der Längsmittelachse 16 und parallel zu der in dem Teil 127 angeordneten Ausnehmung 139.

In der Fig. 21 ist eine weitere Ausführungsvariante des Lagerungskastens 124, bestehend aus dem Tragarm 143 und dem Mantelrohr 125, dargestellt. Das einteilige Mantelrohr 125 ist durch ein Formrohr 163 mit kreisrundem Querschnitt gebildet. In einem der Endbereiche 132 ist der ein- oder mehrteilig ausgebildete Tragarm 143 angeordnet, der über ein Verbindungselement 152 mit dem Mantelrohr 125 verbunden ist. Eine im Querschnitt U-förmig ausgebildete Trägerplatte 164 umfasst zumindest bereichsweise das kreisrunde Mantelrohr 125 und ist in zumindest einem Trägerplattenschenkel 165 mit der parallel zu der Ausnehmung 147 des Tragarmes 143 verlaufenden Ausnehmung 139 versehen. Die Trägerplatte 164 ist wiederum über ein Verbindungselement 152 mit dem Mantelrohr 125 zumindest bereichsweise verbunden. Die Ausnehmung 139 liegt zweckmäßig in einer unterhalb des Mantelrohres 125 liegenden Ebene, so dass Bauteile für eine nicht weiters dargestellte Fixiervorrichtung außerhalb des Mantelrohres 125 anordenbar sind.

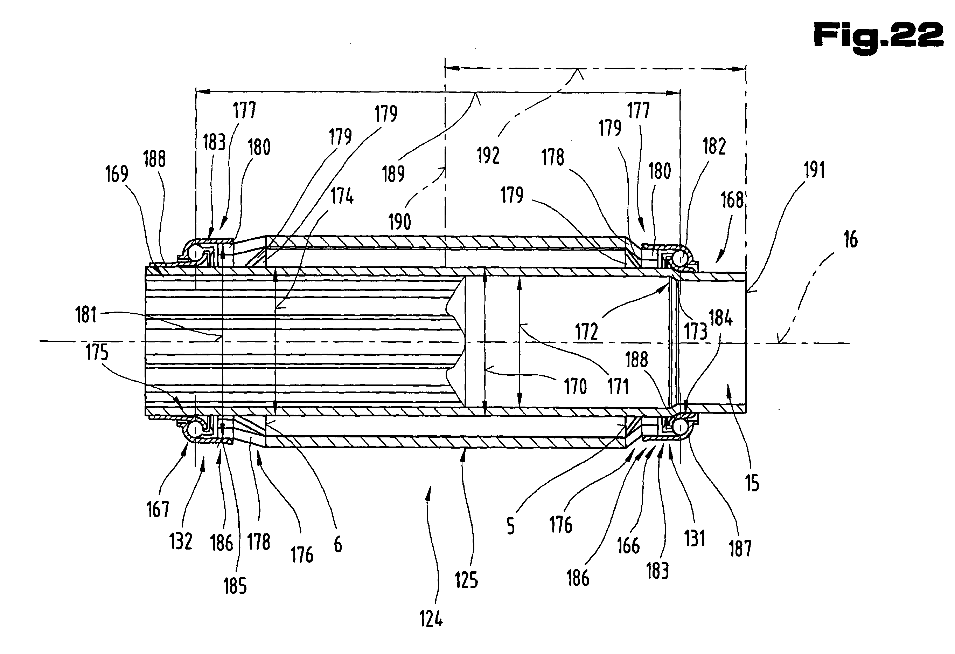

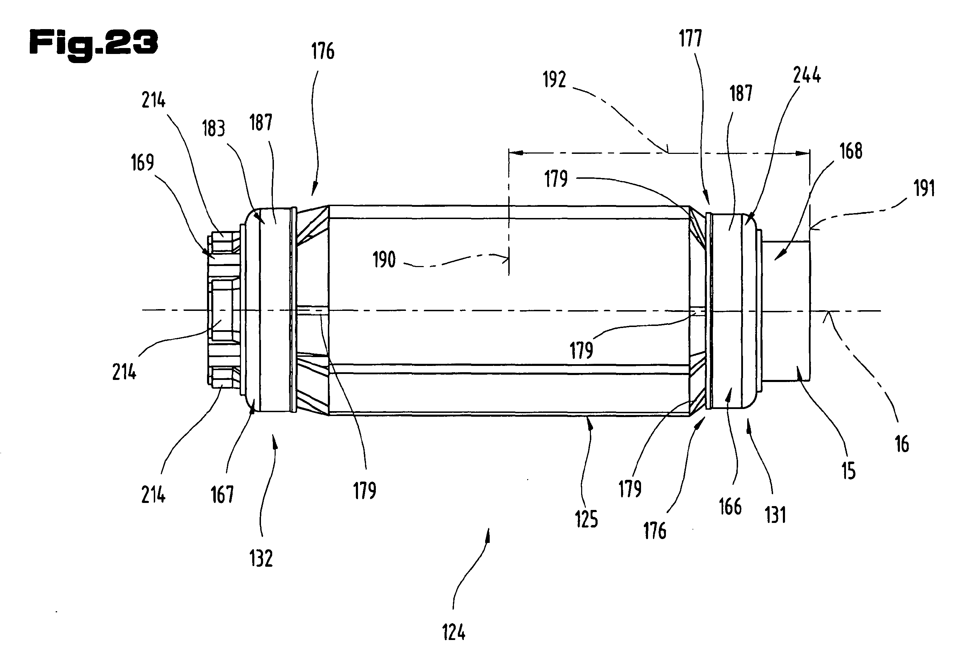

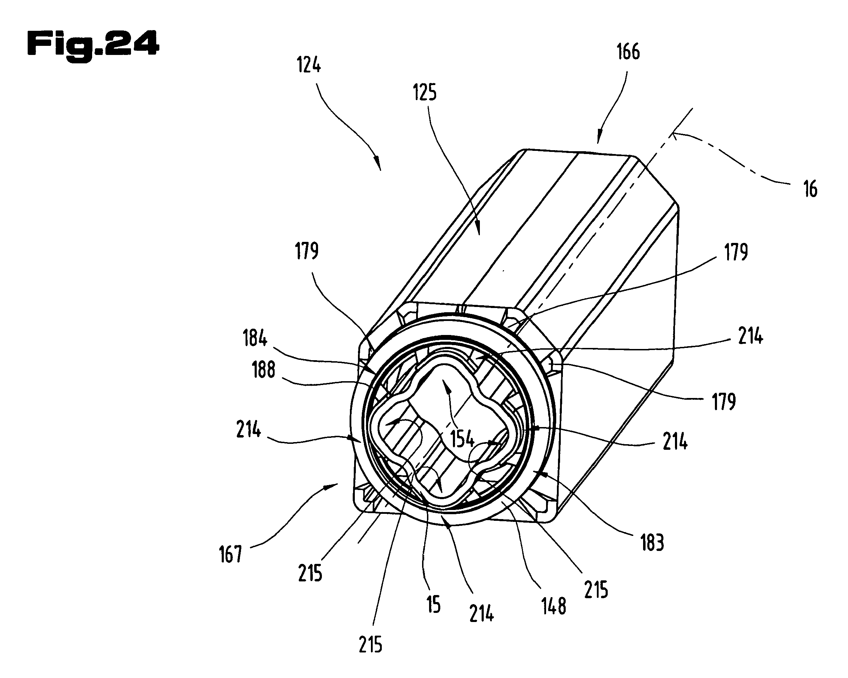

In den gemeinsam beschriebenen Fig. 22 bis 25 ist ein Lagerungskasten 124 für die Lagerung der Lenkwelle 15 in unterschiedlichen Ansichten dargestellt. Das die Lenkwelle 15 zumindest teilweise umgebende Mantelrohr 125 ist an seinen distalen Endbereichen 131, 132 mit Lagerelementen 166, 167 versehen, über welche die Lenkwelle 15 verdrehbeweglich und in axialer Richtung der Lenkwelle 15 und in einer dazu radialen Richtung im wesentlichen spielfrei gehaltert ist. Es sei an dieser Stelle darauf hingewiesen, dass die in den Fig. 1 bis 15 dargestellten, beispielhaften Ausführungen des Mantelrohres 1 für den Lagerungskasten 124 verwendet werden können, aber nicht müssen. Der Lagerungskasten 124 kann natürlich mit allen aus dem Stand der Technik bekannten ein- oder mehrteiligen Mantelrohren 1; 125 versehen werden. Wie in diesem Ausführungsbeispiel gezeigt, bildet die als Hohlwelle ausgebildete Lenkwelle 15 mehrere unterschiedliche Querschnitte aufweisende Lenkwellenabschnitte 168, 169 aus, wovon einer der Lenkwellenabschnitte 168 einen konzentrisch um eine Längsmittelachse 16 der Lenkwelle 15 umlaufenden Kreisringquerschnitt und der diesem Lenkwellenabschnitt 168 nachgeordnete Lenkwellenabschnitt 169 in einer zu seiner Längserstreckung senkrechten Ebene einen etwa kleeblattförmigen Querschnitt aufweist. Der erste Lenkwellenabschnitt 168 weist in seinem Längsverlauf eine Querschnittsverjüngung, insbesondere eine Verjüngung von Außen- und Innendurchmesser, so dass durch die Abstufung zwischen den sich verjüngenden Außendurchmesser 170 und Innendurchmesser 171 eine eine Lagerstelle 172 bildende Schulter 173 gebildet ist. Der Außendurchmesser 170 des ersten Lenkwellenabschnittes 168 begrenzt eine Außenabmessung 174 des im Querschnitt etwa kleeblattförmig ausgebildeten weiteren Lenkwellenabschnittes 169. Im Längsverlauf des weiteren Lenkwellenabschnittes 169 ist eine weitere Lagerstelle 175 für das Lagerelement 167 vorgesehen.

Wie in dieser beispielhaften Ausführung gezeigt, ist das Mantelrohr 125 an den distalen Endbereichen 131, 132 mit Aufnahmebereichen 176, insbesondere Lageraufnahmestellen 177, für die Lagerelemente 166, 167, die durch Abkanten bzw. Abstrecken und/oder Stanzen und/oder Tiefziehen etc. einstückig am Mantelrohr 125 angeformt sind, versehen.

Sich zu den Stirnflächen 5, 6 in abgewandter Richtung konisch verjüngende Zwischenbereiche 178 sind in Längsrichtung derselben durch konzentrisch um die Längsmittelachse 16 umlaufende und durch Schlitze 179 voneinander getrennte Aufnahmesegmente 180 bildende Kreisbogensegmente begrenzt. Die über den Umfang durch die sich diametral gegenüberliegenden Schlitze 179 voneinander getrennten Aufnahmesegmente 180 bilden die einen Außendurchmesser 181 aufweisenden Aufnahmebereiche 176, insbesondere Lageraufnahmestellen 177, aus. Die die Lenkwelle 15 gegenüber dem Mantelrohr 125 verdrehbeweglich lagernden Lagerelemente 166, 167 umfassen zumindest zwei über wenigstens einen Zwischenteil 182, insbesondere einem Wälzkörper, relativ zueinander verstellbare Lagerteile 183, 184, wovon einer der Lagerteile 183 den gegenüberliegenden Aufnahmebereichen 176 zugeordnet ist und über zumindest ein form- und/oder kraftschlüssiges Verbindungselement 185 in durch die Aufnahmebereiche 176 am Mantelrohr 125 und den Lagerteilen 183 gebildeten Überlappungsbereichen 186 das Mantelrohr 125 und die Lagerelemente 166, 167 zueinander positioniert verbunden sind.

Der weitere, an die Querschnittsform der Lenkwelle 15 bzw. der Lenkwellenabschnitte 168, 169 angepasste Lagerteil 184 ist über das Verbindungselement 185 gegebenenfalls form- und/oder kraftschlüssig mit der Lenkwelle 15 verbunden. Das Verbindungselement 185 kann beispielsweise durch eine Schweißnaht, bevorzugt durch eine Laser- oder Plasmaschweißnaht, eine Kleberschichte oder einer Lötverbindung gebildet werden. Das Laser- oder Plasmaschweißen kann mit oder ohne Zusatzwerkstoff, bevorzugt ohne, durchgeführt werden. Die etwa schalen- bzw. topfförmig ausgebildeten, einen Außenring 187 und Innenring 188 bildenden Lagerteile 183, 184 werden zweckmäßig aus einem ebenflächigen Zuschnittteil im Tiefzieh- bzw. Abstreckverfahren und/oder Stanzverfahren hergestellt. Natürlich können die Lagerteile 183, 184 auch über zerspannende Fertigungsverfahren hergestellt werden.

Die in Längsrichtung der Lenkwelle 15 voneinander distanzierten, von den gegenüberliegenden Aufnahmebereichen 176 aufgenommenen oder unmittelbar an dem Mantelrohr 125 angeordneten Lagerelemente 166, 167 sind um einen verstellbaren bzw. veränderbaren Längsabstand 189 voneinander beabstandet. Zumindest eines der Lagerelemente 166 wird nach Festlegung der Position gegenüber dem Mantelrohr 125 und/oder der Lenkwelle 15 und/oder dem weiteren Lagerelement 167 positioniert gehalten und fixiert, wonach das weitere Lagerelement 167 zur Justierung in zur Längsmittelachse 16 paralleler Richtung verschoben wird. Nach Erreichen einer vorgesehenen Position wird auch dieses Lagerelement 167 gegenüber dem Mantelrohr 1 und/oder der Lenkwelle 15 positioniert fixiert. Dazu ist zweckmäßig der dem Aufnahmebereich 176 zugeordnete Außenring 187 längenverschiebbar ausgebildet, wobei der Innenring 188 gleichermaßen mitbewegt wird.

Die Lagerelemente 166, 167, insbesondere die Lagerteile 183, werden im zusammengesetzten Zustand in eine sich mit Aufnahmebereichen 176 überdeckenden Position verbracht. Der Innenring 188 kann gegebenenfalls an der kreisbogenförmig gekrümmten Schulter 173 bzw. der diese bildende Lagerstelle 172 abgestützt werden, wonach der Außenring 183 auf dem bzw. gegenüber dem Mantelrohr 125 verstellt positioniert ist. Ist der zur Längsmittelachse 16 parallel gemessene und vorbestimmbare Längsabstand 189 zwischen den Lagerelementen 166, 167 eingestellt, wird zumindest einer der Lagerteile 183, 184, zweckmäßig beide Lagerteile 183, 184, über das Verbindungselement 185 beispielsweise mit den Aufnahmebereichen 176 und/oder der Lenkwelle 15 positioniert verbunden. Das Verbindungselement 185 ist bevorzugt durch eine Schweißnaht, insbesondere eine Laser- oder Plasmaschweißnaht, gebildet, wobei die Verbindung mit oder ohne Zusatzwerkstoff hergestellt werden kann. Durch die Verstellmöglichkeit zumindest eines der Lagerelemente 166, 167 und eine mit dieser verbundenen Veränderung des Längsabstandes 189 ist es nunmehr möglich, die Lenkwelle 15 im Bereich zwischen den Lagerstellen 172 und 175 bereichsweise vorzuspannen und auf diese Weise eine vorbestimmbare Rollreibung zwischen der Lenkwelle 15 und den Lagerelementen 166, 167 einzustellen und einen Spielausgleich in Richtung der Längserstreckung der Lenkwelle 15 vorzunehmen. Dadurch können Bauteile, die zur Erzeugung einer Vorspannkraft in Längserstreckung der Lenkwelle 15 wirksam sind, entfallen und der Fertigungsaufwand reduziert werden. Es sei darauf hingewiesen, dass die Vorspannkraft bzw. die Rollreibung derart bestimmt wird, dass die zwischen den Lagerstellen 166, 167 gelagerte Lenkwelle 15 keiner in zur Längsmittelachse 16 senkrechter Richtung verlaufenden Auslenkung unterliegt und im wesentlichen kein reibungsbedingter Verschleiß in den Lagerelementen 166, 167 gegeben ist.

Durch die weitere Verstellmöglichkeit zumindest eines der Lagerelemente 166, 167, insbesondere zumindest eines der Lagerteile 183; 184, ist die Lenkwelle 15 in Längsrichtung gegenüber dem mit einer Karosserie ortsfest verbundenen Mantelrohr 125 in ihrer Relativlage verstellbar ausgebildet und ein zwischen einem beliebigen Punkt 190 und einer beliebigen Messmarke 191 vorbestimmtes Einbaumaß 192 einhaltbar bzw. einstellbar. Wie beispielhaft angedeutet, ist das Einbaumaß 192 - wie in strichpunktierten Linien dargestellt - durch einen sich zwischen dem Punkt 190 auf dem Mantelrohr 125 und der Messmarke 191 auf der Lenkwelle 15 erstreckenden Längsabstand eindeutig vorgegeben. Der Punkt 190 kann beispielsweise durch einen an dieser Stelle zu montierenden weiteren, nicht dargestellten Bauteil etc. und die Messmarke 191 beispielsweise durch ein stirnseitiges Ende der Lenkwelle 15 vorgegeben werden.

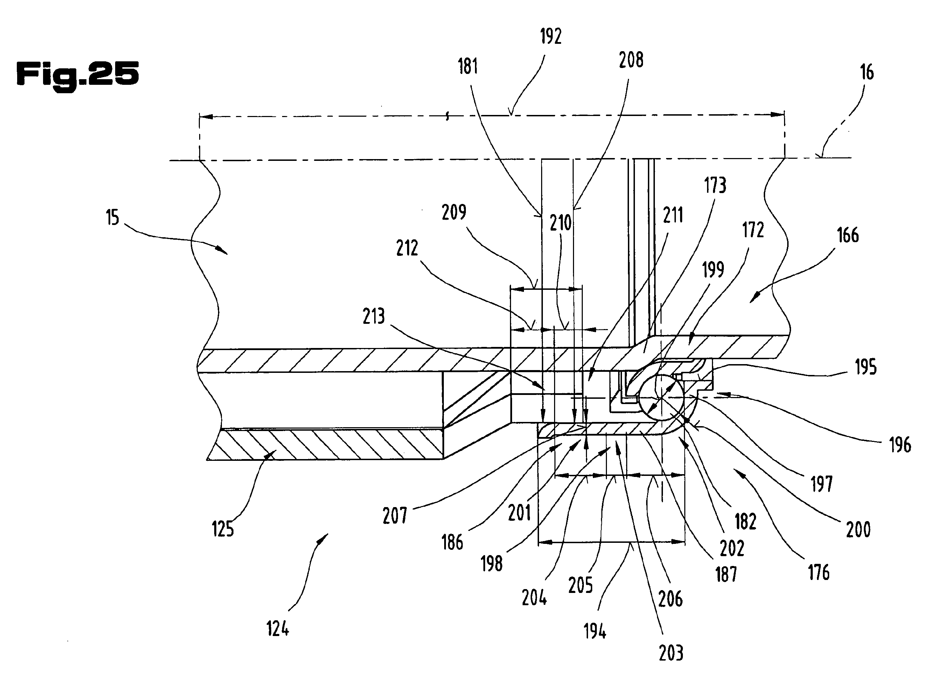

Wie der Fig. 25 besser zu entnehmen ist, ist das auf dem Aufnahmebereich 176 angeordnete, eine Lagerteilbreite 194 aufweisende Lagerelement 166; 167 von einer mit einer Materialdurchtrennung 195 versehenen Bodenplatte 196 begrenzt.

Ein durch die Materialdurchtrennung 195 in der Bodenplatte 196 gebildeter Randsteg 197 ist zu dem zumindest über einen Teil der Lagerteilbreite 194 einen Hohlzylindermantel 198 ausbildenden Außenring 187 zweckmäßig in einer zur Längserstreckung des Hohlzylindermantels 198 senkrecht verlaufenden Ebene senkrecht ausgerichtet. Der im Abkant- oder Tiefziehverfahren spanlos gefertigte Außenring 187 weist an einer dem zwischen dem Innenring 188 und dem Außenring 187 angeordneten Zwischenteil 182 zugewandten Innenseite einen mit einem Durchmesser 199 korrespondierenden Biegeradius 200 auf. Der am Aufnahmebereich 176 des Mantelrohres 125 verstellbar angeordnete Außenring 187 weist mehrere, ausgehend vom sich von den Aufnahmebereichen 176 in Richtung eines stirnseitigen Endes der Lenkwelle 15 erstreckende, unterschiedliche Funktionen aufweisende Teilabschnitte auf, wovon einer der Teilabschnitte durch einen dem Aufnahmebereich 176 zugeordneten Ansatzteil 201 und der diesem gegenüberliegende Teilabschnitt durch einen die Zwischenteile 182 aufnehmenden Führungsteil 202 gebildet sind.

Wird der Innenring 188, wie dargestellt, gegen die eine Anlagefläche bildende Schulter 173 positioniert, ist das Einbaumaß 192 durch Verstellen des Mantelrohres 1; 125 auf bzw. im bzw. gegenüber dem Außenring 183 einstellbar ausgebildet. Der Innenring 188 weist hierzu eine Freistellung auf, so dass dieser die Schulter 173 nur tangential berührt und auf der Lenkwelle 15 nur mit einem Teilbereich abgestützt ist.

Zwischen den einander gegenüberliegenden, den Ansatzteil 201 und den Führungsteil 202 bildenden Teilabschnitt ist ein zusätzlicher, beispielsweise die gleichen Innenabmessungen wie der Ansatzteil 201 und der Führungsteil 202 aufweisender Verstellbereich 203 angeordnet. Der Ansatzteil 201, der Führungsteil 202 und der Verstellbereich 203 weisen jeder für sich eine Breite 204 bis 206 auf. Die Summe der einzelnen Breiten 204 bis 206 bilden die Lagerteilbreite 194 des Außenringes 187 aus. Es sei darauf hingewiesen, dass die Lagerteilbreite 194 im wesentlichen auf dem den Außenring 187 bildenden Hohlzylindermantel 198 eingetragen ist. Für den Einbauraum eines derartigen Lagerelementes 166, 167 ist eine Wandstärke des Randsteges 197 zu berücksichtigen. Die Breite 205 des Verstellbereiches 203 ist derart gewählt, dass ein in zur Längsmittelachse 16 der Lenkwelle 15 paralleler Richtung verlaufendes minimales Verstellmaß zur Einhaltung eines vorgesehenen Einbaumaßes 192 erreicht werden kann. Die Breite 205 des Verstellbereiches 203 beträgt zwischen 0,5 mm und 10 mm, zweckmäßig zwischen 0,7 mm und 4 mm, beispielsweise 0,6 mm. Eine Wandstärke 207 ist zweckmäßig über den gesamten Querschnitt des Außenringes 187 gleich bemessen und beträgt zwischen 1 mm und 10 mm, zweckmäßig zwischen 2 mm und 6 mm.

Natürlich können sowohl der Außenring 187, als auch der Innenring 188 über zerspannende Herstellungsverfahren, wie z.B. Drehen etc., hergestellt werden. Der Ansatz- und Führungsteil und Verstellbereich 201, 202, 203 weisen jeweils einen gleichen Innendurchmesser 208 auf, der zumindest geringfügig größer ausgebildet ist als der maximale Außendurchmesser 181 des Aufnahmebereiches 176. Natürlich können die einzelnen Innendurchmesser 208 des Ansatz- und Führungsteiles und Verstellbereiches 201, 202, 203 unterschiedlich ausgebildet werden. Dadurch kann der Außenring 187 auf dem Aufnahmebereich 176 aufgeschoben werden. Der Außenring 187 wird während des Aufschiebens des Außenringes 187 auf den eine Breite 209 aufweisenden Aufnahmebereich 176 am Mantelrohr 125 in Längsrichtung und in radialer Richtung geführt. Die Breite 209 des Aufnahmebereiches 176 setzt sich aus einer Breite 210 eines Ansatzteiles 211 und einer Breite 212 eines Verstellbereiches 213 zusammen. Der Ansatzteil 201 des Außenringes 187 bildet im zusammengesetzten Zustand mit dem Mantelrohr 125 im Aufnahmebereich 176 mit seinem Ansatzteil 211 den Überlappungsbereich 186 aus.

Ist ein vorgeschriebenes Einbaumaß 192, beispielsweise der Längsabstand zwischen der Lenkwelle 15 und dem Mantelrohr 125, einzuhalten, ist durch eine Relativverstellung des Außenringes 187 auf den Aufnahmebereich 176 auf bzw. gegenüber dem Mantelrohr 125 der vorgegebene Abstand bzw. das Einbaumaß 192 einzustellen, wonach nach dem Erreichen einer gewünschten Position bzw. Relativlage der verstellte Außenring 187 über ein Verbindungselement 185 mit dem Aufnahmebereich 176 des Mantelrohres 125 zweckmäßig unlösbar verbunden wird.

Nachdem durch die Verstellung und Fixierung des Außenringes 187 des ersten Lagerelementes 166 das Einbaumaß 192 eingestellt wurde, wird über das weitere, dem Lagerelement 166 gegenüberliegende Lagerelement 167 in Richtung des ersten Lagerelementes 166 zugestellt, so dass eine spielfreie Einstellung und somit ein Toleranzausgleich ohne zusätzliche spielausgleichende Elemente möglich ist.

Der Lagerteil 183 des Lagerelementes 167 weist bevorzugt die gleiche konstruktive Ausgestaltung wie der Lagerteil 183 des Lagerelementes 166 auf. Der weitere Lagerteil 184 bzw. Innenring 188 ist zumindest bereichsweise an die Querschnittsform der Lenkwelle 15 angepasst. Eine Breite des Innenringes 188 des Lagerelementes 167 setzt sich durch mehrere Teilabschnitte zusammen, wovon einer der im Bereich des Zwischenteiles 182 bzw. der Wälzkörper angeordneten Teilabschnitte durch einen konzentrisch um die Längsmittelachse 16 der Lenkwelle 15 umlaufenden, die Wälzkörper aufnehmenden Führungsteil 202 gebildet ist. Der an diesem Teilabschnitt anschließende weitere Teilabschnitt ist mit mehreren sich diametral gegenüberliegenden und sich über einen Teil des Umfanges erstreckende, formschlüssig mit der Lenkwelle 15 verbundene streifenförmige Vorsprünge 214 versehen. Zweckmäßig erstrecken sich die Vorsprünge 214 ausgehend von dem kreisrunden Teilabschnitt in Richtung eines stirnseitigen Endes der Lenkwelle 15. Diese Vorsprünge 214 werden mit Eckbereichen 215 der etwa kleeblattförmigen Lenkwelle 15 formschlüssig überlappend in Eingriff gebracht, so dass bei einer Verdrehung der Lenkwelle 15 der Innenring 188 gegenüber dem feststehenden, mit dem Mantelrohr 125 verbundenen Außenring 187 relativ verstellt wird. Natürlich kann der Innenring 188 zusätzlich über das Verbindungselement 185 mit der Lenkwelle 15 form- und/oder kraftschlüssig verbunden werden.

Es sei an dieser Stelle darauf hingewiesen, dass das Verbindungselement 185 zwischen den Lagerteilen 183, 184 und den Aufnahmebereichen 176 im Überlappungsbereich 186 bzw. den diesen bildenden Verbindungsbereich und/oder der Lenkwelle 15 zumindest punktweise oder flächig oder über den gesamten Umfang angeordnet ist.

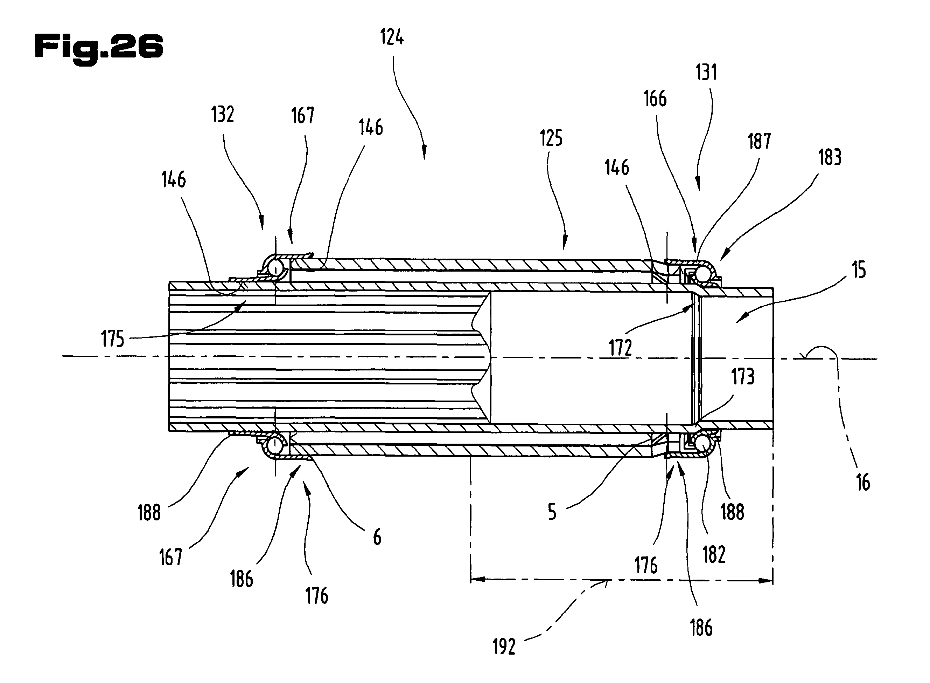

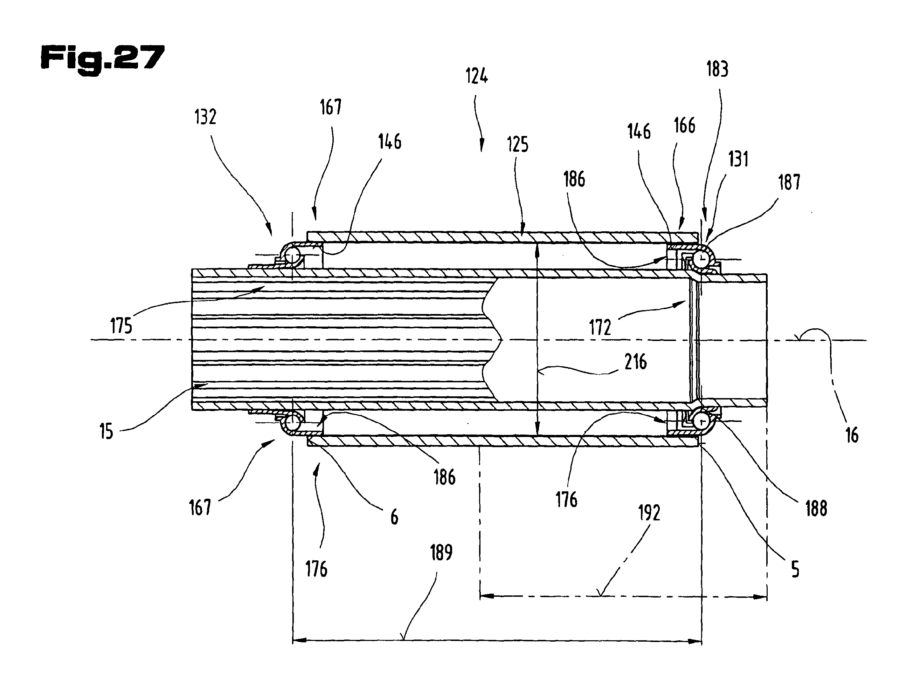

In den gemeinsam beschriebenen Fig. 26 und 27 sind andere Ausführungsvarianten eines Lagerungskastens 124 mit dem einen kreiszylindrischen Querschnitt aufweisenden Mantelrohr 125 im Längsschnitt gezeigt. Das zweckmäßig einteilige Mantelrohr 125 ist im Längsverlauf beispielsweise an dessen gegenüberliegenden distalen Endbereichen 131, 132 mit den Aufnahmebereichen 176 ausgestattet, denen unmittelbar die schalenförmigen Lagerteile 183 bzw. die diese bildenden Außenringe 187 zugeordnet sind. Die an einer den Aufnahmebereich 176 bildenden Außenfläche auf das Mantelrohr 125 aufgesetzten und positionierten Außenringe 187 der Lagerelemente 166, 167 werden form- und/oder kraftschlüssig, insbesondere kraftschlüssig, unmittelbar mit dem Mantelrohr 125 bewegungsfest verbunden. Natürlich besteht auch die Möglichkeit, um Fertigungstoleranzen des Mantelrohres 125 auszugleichen, die Auf nahmebereiche 176 beispielsweise über zerspannende Bearbeitungsverfahren gegebenenfalls nachzubearbeiten. Die Ausbildung und Anordnung der Lagerelemente 166, 167 sowie das Einstellen des Einbaumaßes 192 und des Längsabstandes 189 kann den zuvor ausführlich beschriebenen Figuren entnommen werden.

In der Fig. 27 sind die durch voneinander getrennte Teilbereiche an einer Innenfläche bzw. Innenseite des Mantelrohres 125 gebildeten Aufnahmebereiche 176 gezeigt. Die in das Mantelrohr 125 eingesetzten und positionierten Außenringe 187 der Lagerelemente 166, 167 werden form- und/oder kraftschlüssig, insbesondere kraftschlüssig, unmittelbar mit dem Mantelrohr 125 bewegungsfest verbunden. Die den Aufnahmebereichen 176 zugeordneten Außenringe 187 weisen ebenfalls in Richtung ihrer Lagerteilbreite 194, ausgehend von dem Aufnahmebereich 176 in Richtung des stirnseitigen Endes der Lenkwelle 15 den Ansatzteil 201, den Führungsteil 202 und den Verstellbereich 203 auf (siehe Fig. 25). Der Ansatzteil 201 des Außenringes 187 wird zumindest mit einem Teil der Breite 209 des Aufnahmebereiches 176 überlappt und in den dadurch gebildeten Überlappungsbereich 186 mit dem Mantelrohr 125 form- und/oder kraftschlüssig verbunden. Eine Innenabmessung 216, insbesondere ein Durchmesser, ist zumindest um die Wandstärken 207 zuzüglich dem Innendurchmesser 208 des Außenringes 187 größer ausgebildet, so dass zumindest ein Teil des Lagerelementes 166, 167 in das Mantelrohr 125 eingesetzt ist (siehe ebenfalls Fig. 25).

Eine andere, nicht weiters dargestellte Ausführung besteht darin, dass der Außenring 187 über die Lagerteilbreite 194, ausgehend von dem Ansatzteil 201, in Richtung des Führungsteiles 202 radial aufgeweitet ist und der Innendurchmesser 208 im Bereich des Ansatzteiles 201 kleiner ausgebildet ist, als der Innendurchmesser 208 im Bereich des Führungsteiles 202. Der zwischen dem Ansatzteil 201 und dem Führungsteil 202 angeordnete Verstellbereich 203 weist die gleichen Abmessungen wie der Ansatzteil 201 auf.

Natürlich kann eine derartige Ausführung der Anordnung der Lagerelemente 166, 167 auch bei Anordnung der Lageraufnahmestelle 177 angewendet werden, indem der Außenring 187 in die Lageraufnahmestelle 177 eingesetzt wird.

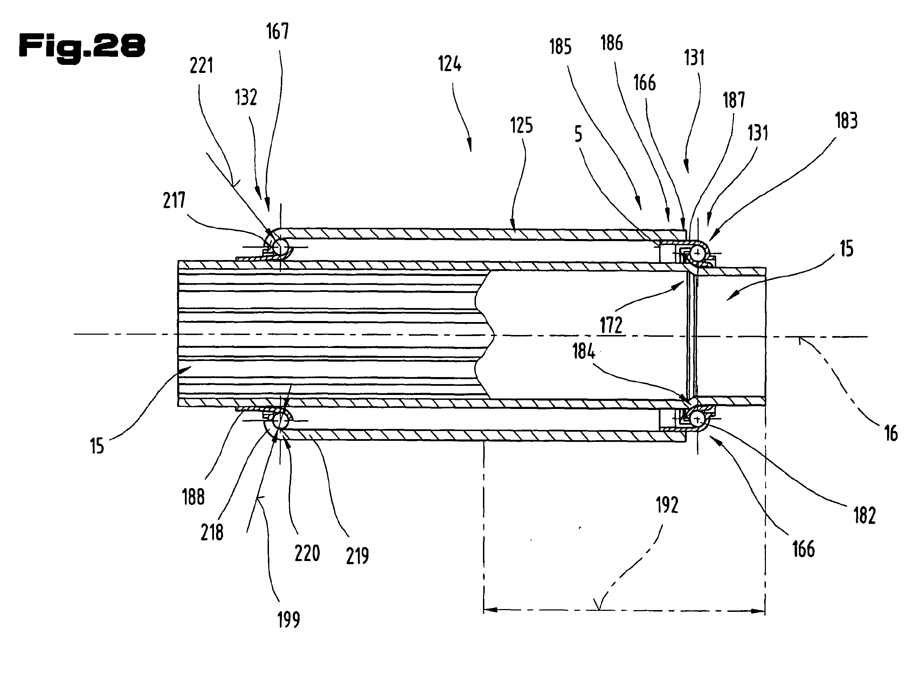

In der Fig. 28 ist eine Ausführungsvariante des Lagerungskastens 124 gezeigt, die gegebenenfalls für sich eine eigenständige erfinderische Lösung bilden kann.

Das Mantelrohr 125 des Lagerungskastens 124 bildet im Längsverlauf, insbesondere in einem der Endbereiche 131; 132, einen der Lagerteile 183, 184 des Lagerelementes 166; 167 aus. Das bevorzugt in einer zu seiner Längserstreckung senkrechten Ebene einen kreiszylindrischen Querschnitt aufweisende Mantelrohr 125 ist topfartig ausgebildet und im Endbereich 132 mit einer von der Lenkwelle 15 und dem Innenring 188 durchsetzten Materialdurchtrennung 217 versehen. Das Mantelrohr 125 kann durch einen Zieh- und/oder Tiefzieh- und/oder Abkant-und/oder Stanzteil etc. aus metallischem Werkstoff gebildet werden. Natürlich besteht auch die Möglichkeit, dass das Mantelrohr 125 aus einem verschleißfesten Kunststoff gebildet ist. Ein zwischen einem den stirnseitigen Endbereich 132 des Mantelrohres 1 radial umlaufenden Randsteg 218 und einem das Mantelrohr 125 bildenden Hohlzylindermantel 219 gebildeten Führungsteil 220 für zumindest einen Zwischenteil 182 bzw. Wälzkörper weist einen mit dem Durchmesser 199 der Wälzkörper korrespondierenden Radius 221 auf. Das Lagerelement 166 im gegenüberliegenden Endbereich 131 ist gleich wie in den zuvor beschriebenen Ausbildungen ausgeführt.

Zur Positionierung der Lenkwelle 15 gegenüber dem Mantelrohr 125 werden die Lenkwelle 15 und der Innenring 188 in eine vorgesehene Position verbracht und wird nach Erreichen dieser Position der Innenring 188 mit der Lenkwelle 15 über das Verbindungselement 185 form- und/oder kraftschlüssig verbunden.

Eine andere, nicht weiters dargestellte Ausführung besteht darin, dass das Mantelrohr 125 im Endbereich 131; 132 radial aufgeweitet ist und der Übergangsbereich zwischen einer kleineren und einer größeren Querschnittsabmessung den Führungsteil 202 für die Zwischenteile 182 ausbildet. So ist es möglich, dass das Mantelrohr 125 an einem Endbereich 132 den topfartigen, mit einer Materialdurchtrennung 217 versehenen Lagerteil 183 und am weiteren Endbereich 132 den durch eine Materialaufweitung gebildeten Lagerteil 183 ausbildet.

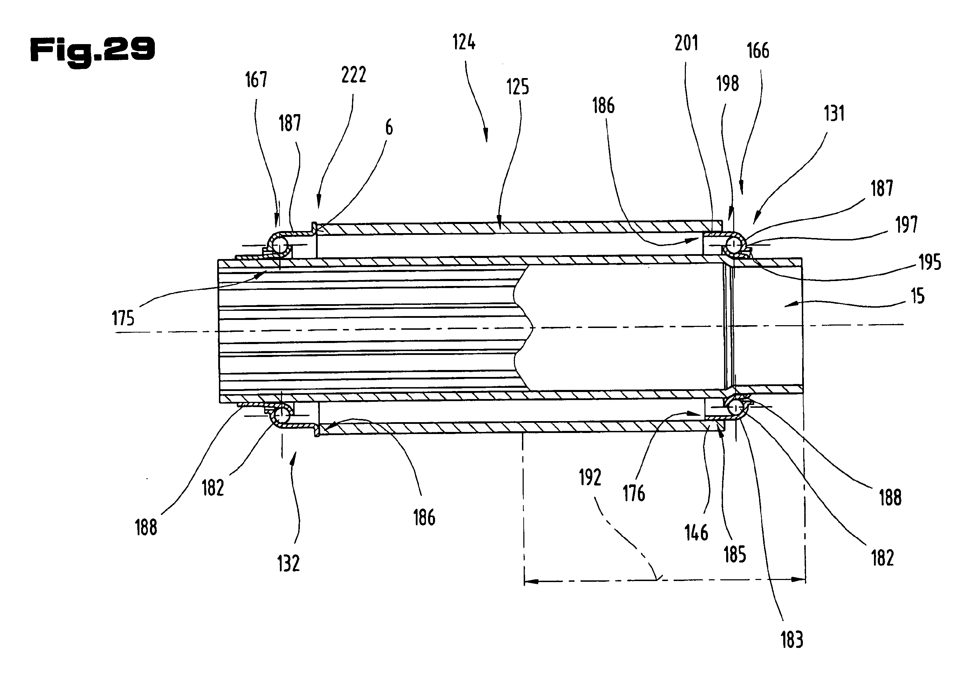

In der Fig. 29 ist eine weitere Ausführungsvariante eines Lagerungskastens 124 mit einer weiteren Ausführung einer Lageraufnahmestelle 222 dargestellt. Zumindest eine Lageraufnahmestelle 222 ist an einem der gegenüberliegenden, den Aufnahmebereich 176 bildenden Stirnseiten 5; 6 angeordnet, in welchem der Lagerteil 183 bzw. Außenring 187 mit dem Mantelrohr 125 über ein form- und/oder kraftschlüssiges, insbesondere kraftschlüssiges, Verbindungselement 185 verbunden wird. Die Lageraufnahmestelle 222 ist in etwa topfförmig ausgebildet und mit der Materialdurchtrennung 195 versehen. Zwischen dem verbleibenden Randsteg 197 und den die Lageraufnahmestelle 222 bildenden Hohlzylindermantel 198 ist der Führungsteil 201 für die Zwischenteile 182 ausgebildet. Der Innenring 188 überragt in Richtung des stirnseitigen Endes der Lenkwelle 15 den Außenring 187 und wird ebenfalls über das Verbindungselement 185 mit der Lenkwelle 15 form- und/oder kraftschlüssig verbunden.

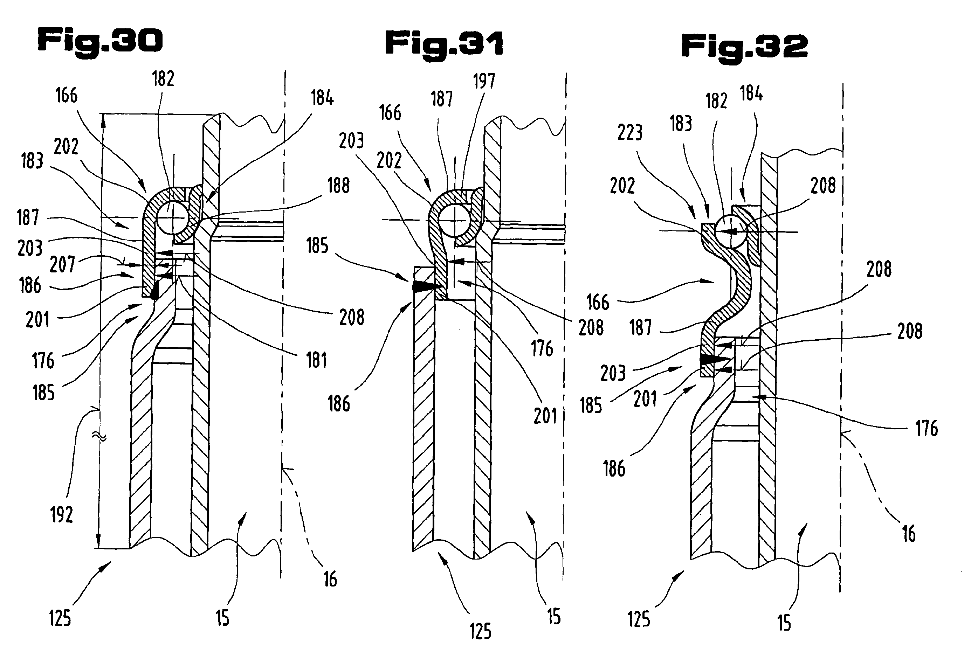

In den gemeinsam beschriebenen Fig. 30 bis 37 sind weitere Ausführungsvarianten für den Aufnahmebereich 176 am Mantelrohr 125 und für das Lagerelement 166; 167 in stark vereinfachter, schematischer Darstellung gezeigt. Fig. 30 zeigt den dem Aufnahmebereich 176 zugeordneten Lagerteil 183, der topfartig ausgebildet ist, und den dem Aufnahmebereich 176 zugeordneten Ansatzteil 201, den diesem gegenüberliegenden Führungsteil 202 und den zwischen diesem angeordneten Verstellbereich 203, wovon jeder gleiche Innendurchmesser 208 ausbildet. Der Aufnahmebereich 176 ist bevorzugt kreiszylindrisch ausgebildet. Der Außenring 187 wird nach dem Verstellen auf bzw. gegenüber dem Mantelrohr 125 und Erreichen eines vorbestimmbaren Einbaumaßes 192 über das Verbindungselement 185, das im vorliegenden Ausführungsbeispiel durch eine Kehlnaht gebildet ist, unlösbar mit dem Mantelrohr 125 bzw. mit dem Aufnahmebereich 176 verbunden. Natürlich besteht auch die Möglichkeit, dass einer der Teile, insbesondere der Außenring 187, im Überlappungsbereich 186 durchgeschweißt wird. Wie in diesem Ausführungsbeispiel gezeigt, ist das Mantelrohr 125 im Aufnahmebereich 176 in seinem Außendurchmesser 181 zumindest um die Wandstärke 207 des Außenringes 287 kleiner bemessen, wonach das Mantelrohr 125 in seinen Außenabmessungen am Lagerelement 166 nicht überragt ist.

In der Fig. 31 ist das Mantelrohr 125 gezeigt, welches an seiner Innenseite den Aufnahmebereich 176 ausbildet. Diese Ausführung eignet sich besonders gut für das Durchschweißen des Mantelrohres 125 im Überlappungsbereich 186. Der Lagerteil 183 weist in seiner Längserstreckung unterschiedliche Innendurchmesser 208 auf, wobei der Innendurchmesser 208 des Ansatzteiles 201 und des Verstellbereiches 203 gleich ausgebildet sind und der Innendurchmesser 208 im Bereich des Führungsteiles 202, ausgehend vom Ansatzteil 201, in Richtung des Führungsteiles 202 aufweitend verläuft. Im Anschluss daran ist der einen Bereich des Führungsteiles 202 ausbildende, sich in Richtung der Lenkwelle 15 erstreckende Randsteg 197 ausgebildet.

Fig. 32 zeigt eine weitere Ausführungsvariante des an der Außenseite des Mantelrohres 125 bzw. Aufnahmebereiches 176 angeordneten Lagerteiles 183, wobei die Innendurchmesser 208 des Ansatzteiles 201 und des Verstellbereiches 203 gleich bemessen sind. Im weiteren Längsverlauf des Lagerteiles 183 verjüngt sich der Innendurchmesser 208, wonach Teilbereiche des Führungsteiles 202 zylindrisch und anschließend daran aufweitend verlaufen. Der Innendurchmesser 208 einer Führungsteilanlagefläche 223 im Bereich des Zwischenteiles 182 ist zweckmäßig wiederum gleich bemessen wie ein Innendurchmesser 208 des Ansatzteiles 201 und des Verstellbereiches 203. Der Lagerteil 183 weist zwischen dem Verstellbereich 203 und dem Führungsteil 202 einen gekrümmten, der Lenkwelle 15 zugewandt einen konkaven Verlauf auf. Das Lagerelement 166; 167 ist in axialer Richtung der Lenkwelle 15 über nicht weiters dargestellte Sicherungselemente, wie beispielsweise Spannelemente, an der Lenkwelle 15 oder zusätzlich durch auf der Lenkwelle 15 aufzubringende form- und/oder kraftschlüssige Bauelemente gesichert. Zweckmäßig ist eine Außenabmessung des Lagerelementes 166; 167 durch die Außenabmessung des Mantelrohres 125 begrenzt.

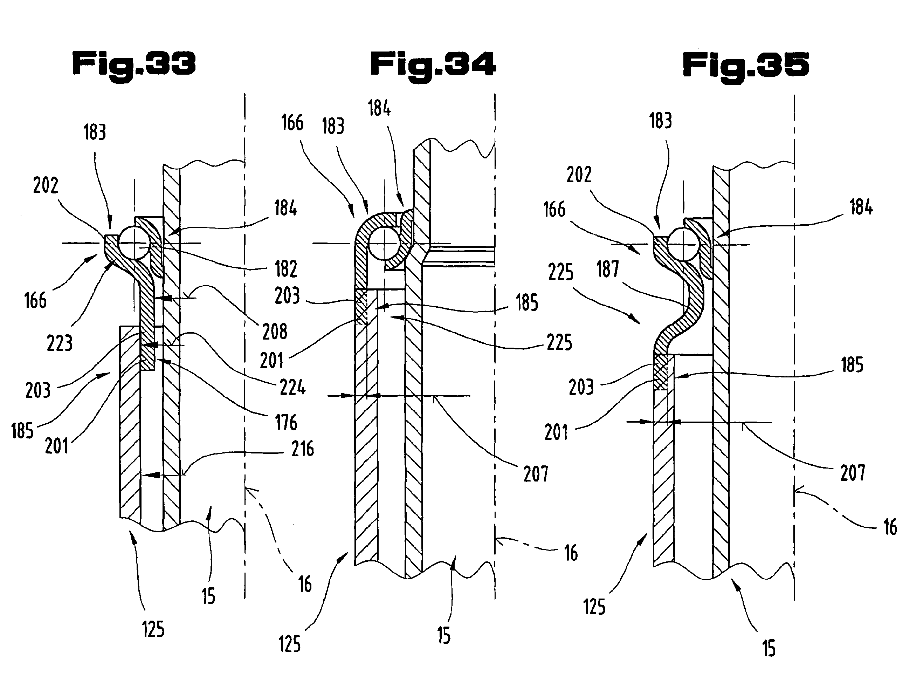

In der Fig. 33 ist eine weitere Ausführungsvariante einer Ausbildung des Lagerteiles 166; 167 gezeigt, welcher an der Innenseite des Mantelrohres 125 angeordnet ist. Der Lagerteil 166; 167 ist in Richtung seiner Längserstreckung im Bereich des Ansatzteiles 201 und Verstellbereiches 203 zylindrisch ausgebildet und weist eine Außenabmessung 224, zweckmäßig einen Durchmesser, auf, die zumindest geringfügig kleiner bemessen ist als eine Innenabmessung 216 des Mantelrohres 125. Der dem Ansatzteil 201 gegenüberliegende und in Richtung der Längserstreckung des Lagerteiles 183; 184 aufweitend verlaufende Führungsteil 202 bildet die Führungsteilanlagefläche 223 für den Zwischenteil 182 aus.

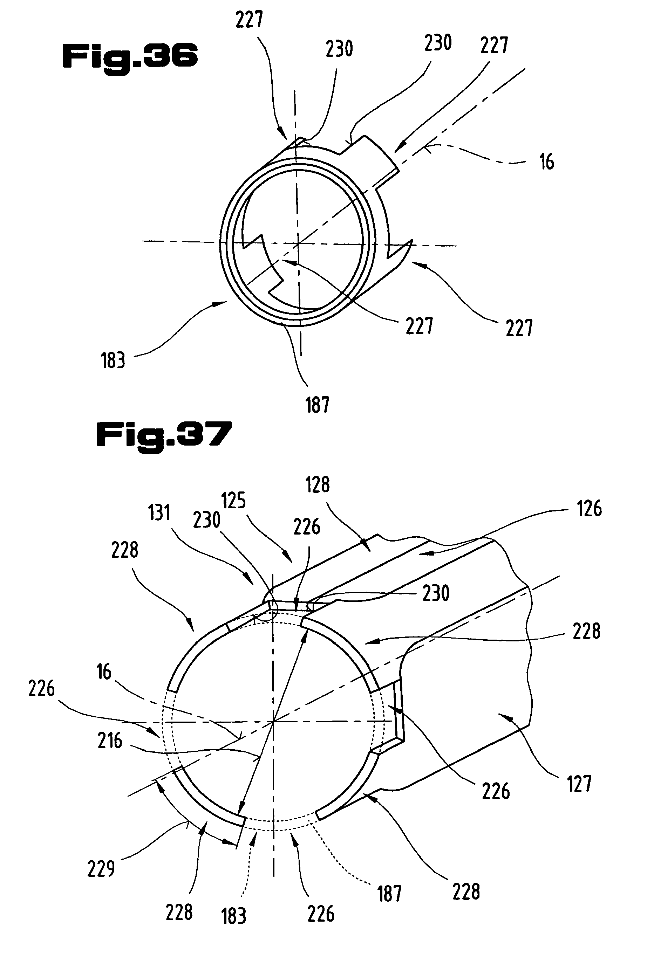

Wie aus den Fig. 36 und 37 besser zu ersehen ist, sind weitere Ausführungsvarianten für die Ausbildung des Lagerteiles 183; 184 und des Aufnahmebereiches 176 am Mantelrohr 125 dargestellt. Das Mantelrohr 125 weist bevorzugt in einem seiner Endbereiche 131; 132 den Aufnahmebereich 225, der einstückig am Mantelrohr 125 angeformt ist, auf. Das einteilig oder mehrteilig ausgebildete Mantelrohr 125 kann einen kreisrunden und/oder mehreckigen Querschnitt aufweisen. Wie im bevorzugten Ausführungsbeispiel gezeigt, ist das Mantelrohr 125 mehreckig ausgebildet und der Aufnahmebereich 225 durch mehrere sich diametral gegenüberliegende und voneinander durch Aufnahmekammern 226 für mit korrespondierenden Vorsprüngen 227 versehene Lagerteile 183; 184 getrennte Aufnahmesegmente 228 gebildet. Die Aufnahmesegmente 228 besitzen bevorzugt die gleiche Wandstärke, wie die das Mantelrohr 125 bildenden Teile 127, 128. Die Innenabmessung 216, insbesondere der Durchmesser, des Lagerteiles 166; 167 begrenzt die Krümmungsradien der umzuformenden, etwa kreisbogenförmigen Aufnahmesegmente 228. Zwischen den eine Kreisbogenlänge 229 aufweisenden Aufnahmesegmenten 228 ragen die in Längsrichtung des Mantelrohres 125 verlaufenden schlitzförmigen Aufnahmekammern 226 zumindest über einen Teil einer Länge der Aufnahmesegmente 228 vor, wobei einander zugewandte Längsseitenflächen 230 der radial voneinander distanzierten Aufnahmesegmente 228 als Verbindungsflächen für den in die Aufnahmekammer 226 vorragenden Vorsprung 227 des Lagerteiles 183 ausgebildet sind. Gegebenenfalls kann auch die sich zwischen den gegenüberliegenden Längsseitenflächen 230 erstreckende Seitenfläche als Verbindungsfläche ausgebildet sein.

In der Fig. 36 ist der Lagerteil 183 näher dargestellt. Die mit den Aufnahmekammern 226 des Aufnahmebereiches 225 korrespondierenden Vorsprünge 227 des Lagerteiles 166; 167 weisen den dem Mantelrohr 125 zugewandten Ansatzteil 201 und den Verstellbereich 203 auf, an den der radial umlaufende, den Randsteg 218 ausbildende Führungsteil 202 anschließt. Zweckmäßig ist eine parallel zur Längsachse 16 der Lenkwelle 15 parallel bemessene Länge der Aufnahmekammern 226 größer ausgebildet als eine Länge der Vorsprünge 227 des Lagerteiles 183; 184. Zweckmäßig ist zumindest eine der Wandstärken der Aufnahmesegmente 228 oder des Lagerteiles 183; 184 kleiner bemessen. Selbstverständlich ist es aber auch möglich, beide Wandstärken 207 mit gleichen Abmessungen bzw. Wandstärken auszubilden.

Zumindest einer der zwischen den Aufnahmesegmenten 228 verdrehgesichert aufgenommenen Lagerteile 183; 184 ist gegenüber dem Mantelrohr 125 relativ verstellbar ausgebildet, um das Einbaumaß 192 einzustellen bzw. einzuhalten. Nach Positionierung des Lagerteiles 183; 184 gegenüber dem Mantelrohr 125 oder des Mantelrohres 125 gegenüber dem Lagerteil 183; 184 werden diese in den durch Längsseitenflächen 230 der Vorsprünge 227 und den Längsseitenflächen 230 der Aufnahmesegmente 228 gebildeten linienförmigen Überlappungsbereichen über das Verbindungselement 185 miteinander unlösbar verbunden. Die Außendurchmesser 181, 224 der Aufnahmebereiche 225, insbesondere der Aufnahmesegmente 228, und des Lagerteiles 183; 184 verlaufen fluchtend zueinander. Die stumpf aneinander gelegten, die Verbindungsflächen bildenden Längsseitenflächen 229, 230 der Aufnahmesegmente 228 und Vorsprünge 227 werden zweckmäßig über eine Kehlnaht miteinander verbunden.

Zweckmäßig liegt der Verbindungsbereich 126 zwischen den beiden gegenüberliegenden Teilen 127, 128 des Mantelrohres 125 und zwischen den gegenüberliegenden und jeweils von den Teilen 127, 128 ausgebildeten Aufnahmesegmenten 228. Die Teile 127, 128 sind zweckmäßig symmetrisch ausgebildet. Die vertikale Längsmittelebene verläuft bevorzugt deckungsgleich mit der zwischen den Verbindungsbereichen 126 gebildeten Ebene.

Unabhängig von den zuvor beschriebenen Fig. sei abschließend darauf hingewiesen, dass die Abmessungen, wie beispielsweise der Innendurchmesser 208 oder die Außenabmessung 224 des Lagerteiles 183 und die Abmessungen, wie beispielsweise der Innenabmessung oder Außendurchmesser 216; 181, des Aufnahmebereiches 133; 134; 176; 225 derart bemessen sind, dass der Lagerteil 183 bei der Montage entgegen der Wirkung einer zwischen dem Lagerteil 183 und Aufnahmebereich 133; 134; 176; 225 wirkenden Reibkraft aufgeschoben wird.

Natürlich sind die in den Figuren gezeigten unterschiedlichen Ausführungen der Lagerteile 183 bzw. des Außenringes 187 an dem Lagerungskasten 124 beliebig untereinander kombinierbar.

Der Ordnung halber sei abschließend darauf hingewiesen, dass zum besseren Verständnis das erfindungsgemäße Mantelrohr 1; 125 und der Lagerungskasten 124 bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1 bis 5; 6; 7; 8, 9; 10; 11; 12, 13, 14; 15; 16 bis 19; 20; 21; 22, 23, 24; 25; 26, 27; 28; 29; 30 bis 37 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen zu entnehmen.

### Bezugszeichenaufstellung

- 1: Mantelrohr
- 2: Ausnehmung
- 3: Teil
- 4: Teil
- 5: Stirnfläche

- 6: Stirnfläche
- 7: Lageraufnahmestelle
- 8: Lageraufnahmestelle
- 9: Lager
- 10: Lager

- 11: Innendurchmesser
- 12: Außendurchmesser
- 13: Breite
- 14: Außenring
- 15: Lenkwelle

- 16: Lenkwellenmittellinie
- 17: Oberfläche
- 18: Bohrung
- 19: Bohrung
- 20: Verstärkungsleiste

- 21: Basis
- 22: Höhe
- 23: Höhe
- 24: Stirnfläche
- 25: Stirnfläche

- 26: Teilungsebene
- 27: Symmetrieachse
- 28: Wandstärke
- 29: Wandstärke
- 30: Querschnitt

- 31: Oberkante
- 32: Breitenmaß
- 33: Außenmaß
- 34: Seitenschenkel
- 35: Winkel

- 36: Zwischenteil
- 37: Außenmaß
- 38: Endteil
- 39: Hohlkehle
- 40: Außenseite

- 41: Innenseite
- 42: Querschnitt
- 43: Seitenschenkel
- 44: Außenmaß
- 45: Länge

- 46: Breite
- 47: Stärke
- 48: Breite
- 49: Länge
- 50: Ausnehmung

- 51: Breite
- 52: Länge
- 53: Seitenfläche
- 54: Winkel
- 55: Stirnfläche

- 56: Stirnfläche
- 57: Abstand
- 58: Lasche
- 59: Bohrung
- 60: Durchmesser

- 61: Dämpfungsorgan
- 62: Außenmaß
- 63: Zwischenteil
- 64: Endteil
- 65: Querschnitt

- 66: Breitenmaß
- 67: Seitenschenkel
- 68: Endteil
- 69: Basis
- 70: Seitenschenkel

- 71: Anfangsteil
- 72: Zwischenteil
- 73: Endteil
- 74: Wandstärke
- 75: Höhe

- 76: Querschnitt
- 77: Außenmaß
- 78: Seitenschenkel
- 79: Endteil
- 80: Lasche

- 81: Ausnehmung
- 82: Lasche
- 83: Außenmaß
- 84: Innendurchmesser
- 85: Außendurchmesser

- 86: Hohlkehle
- 87: Einzelteil
- 88: Endteil
- 89: Hohlkehle
- 90: Wandstärke

- 91: Formkörper
- 92: Leiste
- 93: Oberseite
- 94: Seitenschenkel
- 95: Höhe

- 96: Zwischenteil
- 97: Endteil
- 98: Innendurchmesser
- 99: Außendurchmesser
- 100: Öffnungsschlitz

- 101: Breite
- 102: Länge
- 103: Breite
- 104: Länge
- 105: Stirnfläche

- 106: Stirnfläche
- 107: Lasche
- 108: Höhe

- 109: Abstand
- 110: Stirnfläche

- 111: Hohlkehle
- 112: Lageraufnahmestelle
- 113: Lagereinrichtung
- 114: Außenring
- 115: Käfig

- 116: Wälzkörper
- 117: Innenring
- 118: Außendurchmesser
- 119: Verbindungselement
- 120: Hülse

- 121: Schlitz
- 122: Bohrung
- 123: Schlangenfeder
- 124: Lagerungskasten
- 125: Mantelrohr

- 126: Verbindungsbereich
- 127: Teil
- 128: Teil
- 129: Längsstirnfläche
- 130: Längsstirnfläche

- 131: Endbereich
- 132: Endbereich
- 133: Aufnahmebereich
- 134: Aufnahmebereich
- 135: Lageraufnahmestelle

- 136: Lageraufnahmestelle
- 137: Lagerteil
- 138: Materialrücksetzung
- 139: Ausnehmung
- 140: Seitenschenkel

- 141: Versteifungsbereich
- 142: Befestigungslasche
- 143: Tragarm
- 144: Schenkel
- 145: Tragarmteil

- 146: Breitenmaß
- 147: Ausnehmung
- 148: Zuschnitt- und/oder Stanz- und/oder Biegeteil
- 149: Biegelinie
- 150: Übergangsbereich

- 151: Versteifungselement
- 152: Verbindungselement
- 153: Basis
- 154: Scheitel
- 155: Höhe

- 156: Winkel
- 157: Winkel
- 158: Symmetrieachse
- 159: Zwischenteil
- 160: Endteil

- 161: Wandstärke
- 162: Tragplatte
- 163: Formrohr
- 164: Trägerplatte
- 165: Tragplattenschenkel

- 166: Lagerelement
- 167: Lagerelement
- 168: Lenkwellenabschnitt
- 169: Lenkwellenabschnitt
- 170: Außendurchmesser

- 171: Innendurchmesser
- 172: Lagerstelle
- 173: Schulter
- 174: Außenabmessung
- 175: Lagerstelle

- 176: Aufnahmebereich
- 177: Lageraufnahmestelle
- 178: Zwischenbereich
- 179: Schlitz
- 180: Aufnahmesegment

- 181: Außendurchmesser
- 182: Zwischenteil
- 183: Lagerteil (Außenring)
- 184: Lagerteil (Innenring)
- 185: Verbindungselement

- 186: Überlappungsbereich
- 187: Außenring
- 188: Innenring
- 189: Längsabstand
- 190: Punkt

- 191: Messmarke
- 192: Einbaumaß
- 193:
- 194: Lagerteilbreite
- 195: Materialdurchtrennung

- 196: Bodenplatte
- 197: Randsteg
- 198: Hohlzylindermantel
- 199: Durchmesser
- 200: Biegeradius

- 201: Ansatzteil
- 202: Führungsteil
- 203: Verstellbereich
- 204: Breite
- 205: Breite

- 206: Breite
- 207: Wandstärke
- 208: Innendurchmesser
- 209: Breite
- 210: Breite

- 211: Ansatzteil
- 212: Breite
- 213: Verstellbereich
- 214: Vorsprung
- 215: Eckbereich

- 216: Innenabmessung
- 217: Materialdurchtrennung
- 218: Randsteg
- 219: Hohlzylindermantel
- 220: Führungsteil

- 221: Radius
- 222: Lageraufnahmestelle
- 223: Führungsteilanlagefläche
- 224: Außenabmessung
- 225: Aufnahmebereich

- 226: Aufnahmekammer
- 227: Vorsprung
- 228: Aufnahmesegment
- 229: Kreisbogenlänge
- 230: Längsseitenfläche

## Patentansprüche

1. Lagerungskasten (124) für die Lagerung einer Lenkwelle (15), mit einem die Lenkwelle (15) zumindest teilweise umgebenden Mantelrohr (1; 125), das in Richtung der Lenkwelle (15) voneinander distanzierte Aufnahmebereiche (176; 225) für die Lenkwelle (15) lagernde Lagerelemente (166, 167) aufweist, welche Lagerelemente (166, 167) jeweils einen äußeren Lagerteil (183) und inneren Lagerteil (184) sowie zwischen diesen angeordnete Wälzkörper aufweisen, wobei der äußere Lagerteil (183) der Lagerelemente (166, 167) in Richtung seiner Längserstreckung einen die Wälzkörper aufnehmenden Führungsteil (202) und einen am Aufnahmebereich (176;225) montierbaren Ansatzteil (201) umfasst, **dadurch gekennzeichnet, dass** der äußere Lagerteil (183) zumindest eines der Lagerelemente (166, 167) zusätzlich zwischen den einander gegenüberliegenden Ansatz- und Führungsteilen (201, 202) einen Verstellbereich (203) aufweist, durch den ein Einbaumaß (192) zwischen ersten und zweiten Lagerelement (166, 167) derart einstellbar ist, dass die Lenkwelle (15) in axialer Richtung im wesentlichen spielfrei gelagert ist, und dass die Lagerelemente (166, 167) jeweils über ein Verbindungselement (185) mit dem Mantelrohr (1; 125) und/oder der Lenkwelle (15) verbunden sind.

2. Lagerungskasten nach Anspruch 1, **dadurch gekennzeichnet, dass** der äußere Lagerteil (183) durch einen Tiefzieh- und/oder Stanzteil aus metallischem Werkstoff gebildet ist.

3. Lagerungskasten nach Anspruch 1, **dadurch gekennzeichnet, dass** der Ansatzteil (201) und Verstellbereich (203) jeweils durch einen konzentrisch um eine Längsmittelachse (16) umlaufenden, gleiche Abmessungen aufweisenden Kreisringabschnitt gebildet ist.

4. Lagerungskasten nach Anspruch 1 oder 2, **dadurch gekennzeichnet, dass** der äußere Lagerteil (183) in seinem Längsverlauf, ausgehend von dem Verstellbereich (203) in Richtung des Führungsteiles (202) mit einer eine Breite aufweisenden radialen Aufweitung versehen ist.

5. Lagerungskasten nach Anspruch 1 oder 2, **dadurch gekennzeichnet, dass** der äußere Lagerteil (183) in seinem Längsverlauf, ausgehend von dem Verstellbereich (203), in Richtung des Führungsteiles (202) mit einer eine Breite aufweisenden radialen Verjüngung versehen ist.

6. Lagerungskasten nach einem der Ansprüche 1 bis 5, **dadurch gekennzeichnet, dass** der Verstellbereich (203) vom äußeren Lagerteil (183) eine Breite (205) von etwa 0,5 mm bis 10 mm, insbesondere zwischen 0,7 mm und 4 mm, beträgt.

7. Lagerungskasten nach Anspruch 1, **dadurch gekennzeichnet, dass** der Ansatzteil (201) und Verstellbereich (203) des äußeren Lagerteiles (183) durch mehrere diametral gegenüberliegende kreisbogenförmige Vorsprünge (227) mit diese voneinander trennende Aufnahmekammern für das zumindest bereichsweise Aufnehmen von Aufnahmesegmenten (228) eines Aufnahmebereiches (225) gebildet ist.

8. Lagerungskasten nach Anspruch 1, **dadurch gekennzeichnet, dass** die Aufnahmebereiche (176; 225) durch einen Teilbereich des Mantelrohrs (1; 125) gebildet sind.

9. Lagerungskasten nach Anspruch 1, **dadurch gekennzeichnet, dass** die Aufnahmebereiche (176; 225) durch an distalen Endbereichen (131, 132) des Mantelrohrs (1; 125) angeordnete Lageraufnahmestellen (7, 8; 135, 136; 177) gebildet sind.

10. Lagerungskasten nach Anspruch 1, **dadurch gekennzeichnet, dass** das Mantelrohr (125) einen ersten Teil (127) und einen weiteren Teil (128) aufweist, die jeweils halbschalenförmig ausgebildet und in einem in einer zur senkrechten Längsmittelebene parallelen Ebene liegenden Verbindungsbereich (126) über zumindest ein Verbindungselement miteinander verbunden sind und dass die Aufnahmebereiche (133, 134; 176; 225) für die Lagerelemente (166, 167) durch jeweils an den Teilen (127, 128) einstückig angeformte, etwa schalenförmige Lagerteile (137) gebildet sind.

11. Lagerungskasten nach Anspruch 9, **dadurch gekennzeichnet, dass** das Mantelrohr (1; 125) einen ersten Teil (3; 127) und einen weiteren Teil (4; 128) aufweist, die über ein Verbindungselement miteinander verbunden sind und einer der Teile (3, 4; 127, 128) in einer zu seiner Längserstreckung senkrechten Ebene einen etwa U-förmigen oder trapezförmigen Querschnitt aufweist und an den beiden gegenüberliegenden, voneinander abgewendeten Stirnflächen des ersten und/oder weiteren Teils (3, 4; 127, 128) die Lageraufnahmestellen (7, 8; 135, 136; 177) vorgesehen sind.

12. Lagerungskasten nach Anspruch 1, **dadurch gekennzeichnet, dass** das Mantelrohr (1; 125) durch ein einen in zu seiner Längserstreckung senkrechten Ebene kreisrunden Querschnitt aufweisendes Formrohr gebildet ist und dass dieses an den distalen Endbereichen (131, 132) die Aufnahmebereiche (176; 225) für die Lagerelemente (166, 167) ausbildet.

13. Lagerungskasten nach Anspruch 1, **dadurch gekennzeichnet, dass** der betreffende Aufnahmebereich (176; 225) einen zum Verstellen des Mantelrohrs (1; 125) gegenüber dem äußeren Lagerteil (183) ausgebildeten Verstellbereich (213) aufweist, der eine Breite (212) zwischen etwa 0,5 mm und 10 mm, insbesondere zwischen 0,7 mm und 4 mm, beträgt.

14. Lagerungskasten nach Anspruch 1, **dadurch gekennzeichnet, dass** das Verbindungselement (185) zwischen Lagerelement (166, 167) und Mantelrohr (1; 125) und/oder Lenkwelle (15) zumindest punktweise oder über den gesamten Umfang des Mantelrohrs (1; 125) und/oder der Lenkwelle (15) angeordnet ist.

15. Lagerungskasten nach Anspruch 1 oder 14, **dadurch gekennzeichnet, dass** das Verbindungselement (185) durch eine Schweißnaht, bevorzugt durch zumindest eine Laser- oder Plasmaschweißnaht, gebildet ist.

16. Lagerungskasten nach Anspruch 1 oder 14, **dadurch gekennzeichnet, dass** das Verbindungselement (185) durch eine Kleberschicht gebildet ist.

17. Lagerungskasten nach Anspruch 1 oder 14, **dadurch gekennzeichnet, dass** das Verbindungselement (185) durch eine Lötverbindung gebildet ist.

18. Lagerungskasten nach Anspruch 1 oder 14, **dadurch gekennzeichnet, dass** das Verbindungselement (185) durch Druckfügen bzw. Clinchen gebildet ist.

19. Lagerungskasten nach Anspruch 1, **dadurch gekennzeichnet, dass** der äußere Lagerteil (183) in Umfangsrichtung wechselweise mit Vorsprüngen (227) und Aufnahmekammern versehen ist und die Vorsprünge (227) in Aufnahmekammern (226) des Aufnahmebereiches (225) und Aufnahmesegmente (228) des Mantelrohrs (1; 125) in die Aufnahmekammern des äußeren Lagerteils (183) wechselweise ineinander greifen.

20. Verfahren zur Montage von Lagerelementen (166, 167) an einem Mantelrohr (1; 125) eines Lagerungskastens (124), bei dem in Richtung einer Längsachse einer Lenkwelle (15) voneinander distanziert an Aufnahmebereichen (133, 134; 176; 225) die Lagerelemente (166, 167) angeordnet werden, **dadurch gekennzeichnet, dass** vorerst am ersten Aufnahmebereich (133, 134; 176; 225) eines Mantelrohrs (1; 125) und einer Lagerstelle (172, 175) der Lenkwelle (15), das die Lenkwelle (15) verdrehbeweglich lagernde, erste Lagerelement (166, 167) angebracht und ein vorgesehenes Einbaumaß (192) zwischen einem Punkt (190) am Mantelrohr (1; 125) und einer Messmarke (191) auf der Lenkwelle (15) eingestellt wird und dass nachdem die Lenkwelle (15) und das Mantelrohr (1; 125) zueinander justiert wurden, zumindest einer der Lagerteile (183, 184) des ersten Lagerelementes (166) über ein Verbindungselement (185) mit dem Mantelrohr (1; 125) oder der Lenkwelle (15) verbunden wird, worauf das zweite Lagerelement (167) gegenüber dem ersten Lagerelement (166) positioniert verstellt und darauf folgend fixiert wird.

21. Verfahren zur Montage von Lagerelementen (166, 167) an einem Mantelrohr (1; 125) eines Lagerungskastens (124), bei dem in Richtung einer Längsachse einer Lenkwelle (15) voneinander distanziert an Aufnahmebereichen (133, 134; 176; 225) die Lagerelemente (166, 167) angeordnet werden, **dadurch gekennzeichnet, dass** am ersten Aufnahmebereich (133, 134; 176; 225) eines Mantelrohrs (1; 125) und einer Lagerstelle (172, 175) der Lenkwelle (15), das die Lenkwelle (15) verdrehbeweglich lagernde, erste Lagerelement (166, 167) angebracht und über ein Verbindungselement (185) mit dem Mantelrohr (1; 125) oder der Lenkwelle (15) verbunden wird, worauf am zweiten Aufnahmebereich (133, 134; 176; 225) des Mantelrohrs (1; 125) und einer Lagerstelle (172, 175) der Lenkwelle (15), das die Lenkwelle (15) verdrehbeweglich lagernde, zweite Lagerelement (166, 167) angebracht und ein Einbaumaß (192) zwischen ersten und zweiten Lagerelement (166, 167) derart eingestellt wird, dass die Lenkwelle (15) in axialer Richtung im wesentlichen spielfrei gelagert ist und danach das zweite Lagerelement (166, 167) über ein Verbindungselement (185) mit dem Mantelrohr (1; 125) oder der Lenkwelle (15) verbunden wird.

22. Verfahren nach Anspruch 21, **dadurch gekennzeichnet, dass** vorerst am ersten Aufnahmebereich (133, 134; 176; 225) eines Mantelrohrs (1; 125) und einer Lagerstelle (172, 175) der Lenkwelle (15), das die Lenkwelle (15) verdrehbeweglich lagernde, erste Lagerelement (166, 167) angebracht und ein vorgesehenes Einbaumaß (192) zwischen einem Punkt (190) am Mantelrohr (1; 125) und einer Messmarke (191) auf der Lenkwelle (15) eingestellt wird und dass nachdem die Lenkwelle (15) und das Mantelrohr (1; 125) zueinander justiert wurden, zumindest einer der Lagerteile (183, 184) des ersten Lagerelementes (166) über ein Verbindungselement (185) mit dem Mantelrohr (1; 125) oder der Lenkwelle (15) verbunden wird.

23. Verfahren nach Anspruch 20 oder 22, **dadurch gekennzeichnet, dass** die vorbestimmbare Messmarke (191) durch eine an der Lenkwelle (15) vorgesehene Lagerstelle (172) oder ein freies Maß vorgegeben wird.

24. Verfahren nach Anspruch 20 oder 21, **dadurch gekennzeichnet, dass** der innere Lagerteil (184) des ersten Lagerelementes (166) gegen eine Schulter (173) auf der Lenkwelle (15) positioniert wird, worauf das Mantelrohr (1; 125) gegenüber der Lenkwelle (15) justiert und der äußere Lagerteil (183) über das Verbindungselement (185) mit dem Mantelrohr (1; 125) form- und/oder kraftschlüssig verbunden wird.

25. Verfahren nach Anspruch 20 oder 21, **dadurch gekennzeichnet, dass** das zweite Lagerelement (167) während einer vordefinierbaren Einlaufphase positioniert gehalten und gegebenenfalls gegenüber dem ersten Lagerelement (166) weiters verstellt wird, bis ein vorbestimmbarer mechanischer Sollwert erreicht wird, wonach zumindest einer der Lagerteile (183, 184) des Lagerelementes (167) in seiner eingestellten Position über das Verbindungselement (185) mit dem Aufnahmebereich (133, 134; 176; 225) des Mantelrohrs (1; 125) und/oder der Lenkwelle (15) form- und/oder kraftschlüssig verbunden wird.

26. Verfahren nach Anspruch 20 oder 21, **dadurch gekennzeichnet, dass** das Verbindungselement (185) durch eine Laserschweißnaht, bevorzugt ohne Zusatzwerkstoff, gebildet wird.

27. Verfahren nach Anspruch 25, **dadurch gekennzeichnet, dass** der Sollwert der Vorspannung in der Lenkwelle (15) aus.der Rollreibung, die zur Verdrehung der Lenkwelle (15) aufzubringen ist, ermittelt und durch Veränderung des einem Längsabstand (189) zwischen den Lagerelementen (166, 167) entsprechenden Einbaumaßes (192) eingestellt wird.

## Claims

1. Support casing (124) for housing a steering shaft (15) with a steering column tube (1; 125) at least partially surrounding the steering shaft (15), which has receiving regions (176; 225) for bearing elements (166, 167) supporting the steering shaft (15) and spaced apart from one another in the direction of the steering shaft (15) which bearing elements (166, 167) each have an outer bearing part (183) and an inner bearing part (184) and rolling bodies disposed between them, and the outer bearing part (183) of the bearing elements (166, 167) has a guide part (202) accommodating the rolling bodies in the direction of its longitudinal extension and a shoulder part (201) which can be fitted on the receiving region (176; 225), **characterised in that** the outer bearing part (183) of at least one of the bearing elements (166, 167) additionally constitutes an adjustment region (203) between the oppositely lying shoulder and guide parts (201, 202), by means of which a mounted dimension (192) between the first and second bearing element (166, 167) can be set so that the steering shaft (15) is mounted essentially without any clearance in the axial direction, and the bearing elements (166, 167) are each connected to the steering column tube (1; 125) and/or the steering shaft (15) by means of a joining element (185).

2. Support casing as claimed in claim 1, **characterised in that** the outer bearing part (183) is provided in the form of a deep-drawn and/or punched part of metal material.

3. Support casing as claimed in claim 1, **characterised in that** the shoulder part (201) and adjustment region (203) are respectively formed by a circular ring portion of identical dimensions extending concentrically about a longitudinal mid-axis (16).

4. Support casing as claimed in claim 1 or 2, **characterised in that** the outer bearing part (183) is provided with a radially wider portion incorporating a width in its longitudinal contour, starting from the adjustment region (203), in the direction of the guide part (202).

5. Support casing as claimed in claim 1 or 2, **characterised in that** the outer bearing part (183) is provided with a radial taper incorporating a width in its longitudinal contour, starting from the adjustment region (203), in the direction of the guide part (202).

6. Support casing as claimed in one of claims 1 to 5, **characterised in that** the adjustment region (203) of the outer bearing part (183) is of a width (205) of approximately 0.5 mm to 10 mm, in particular between 0.7 mm and 4 mm.

7. Support casing as claimed in claim 1, **characterised in that** the shoulder part (201) and adjustment region (203) of the outer bearing part (183) is formed by several diametrically opposed arcuate projections (227) being mutually separated by receiving compartments for receiving at least certain regions of receiving segments (228) of a receiving region (225).

8. Support casing as claimed in claim 1, **characterised in that** the receiving regions (176; 225) are formed by a part region of the steering column tube (1; 125).

9. Support casing as claimed in claim 1, **characterised in that** the receiving regions (176; 225) are formed by bearing receiving points (7, 8; 134, 136; 177) disposed at the distal end regions (131, 132) of the steering column tube (1; 125).

10. Support casing as claimed in claim 1, **characterised in that** the steering column tube (125) comprises a first part (127) and another part (128), which are respectively of a half-shell shaped design and are joined to one another by means of at least one joining element in a connecting region (126) in a plane lying parallel with the vertical longitudinal mid-plane, and the receiving regions (133, 134; 176; 225) for the bearing elements (166, 167) are approximately shell-shaped bearing parts (137) integrally formed on the parts (127, 128) respectively.

11. Support casing as claimed in claim 9, **characterised in that** the steering column tube (1; 125) has a first part (3; 127) and another part (4; 128) which are joined to one another by means of a joining element, and one of the parts (3, 4; 127, 128) has an approximately U-shaped or trapezoid-shaped cross-section in a plane perpendicular to its longitudinal extension, and the bearing receiving points (7, 8; 135, 136; 177) are provided on the two oppositely lying end faces of the first and/or other part (3, 4; 127, 128) facing away from one another.

12. Support casing as claimed in claim 1, **characterised in that** the steering column tube (1; 125) is a shaped tube with a circular cross-section in a plane perpendicular to its longitudinal extension and forms the receiving regions (176; 225) for the bearing elements (166, 167) at the distal end regions (131, 132).

13. Support casing as claimed in claim 1, **characterised in that** the relevant adjustment region (176; 225) has an adjustment region (213) for adjusting the steering column tube (1; 125) with respect to the outer bearing part (183), with a width (212) of between approximately 0.5 mm and 10 mm, in particular between 0.7 mm and 4 mm.

14. Support casing as claimed in claim 1, **characterised in that** the joining element (185) between the bearing element (166, 167) and steering column tube (1; 125) and/or steering shaft (15) is disposed at least at intermittent points or continuously around the entire circumference of the steering column tube (1; 125) and/or the steering shaft (15).

15. Support casing as claimed in claim 1 or 14, **characterised in that** the joining element (185) is provided in the form of a weld seam, preferably by at least one laser or plasma weld seam.

16. Support casing as claimed in claim 1 or 14, **characterised in that** the joining element (185) is provided in the form of an adhesive layer.

17. Support casing as claimed in claim 1 or 14, **characterised in that** the joining element (185) is provided in the form of a soldered joint.

18. Support casing as claimed in claim 1 or 14, **characterised in that** the joining element (185) is provided by means of a compression joint or clinching.

19. Support casing as claimed in claim 1, **characterised in that** the outer bearing part (183) is provided with projections (227) and receiving compartments disposed alternately in the peripheral direction and the projections (227) engage in receiving compartments (226) of the receiving region (225) in alternation with receiving segments (228) of the steering column tube (1; 125) which engage in the receiving compartments of the outer bearing part (183).

20. Method of assembling bearing elements (166, 167) on a steering column tube (1; 125) of a support casing (124), whereby the bearing elements (166, 167) are disposed on receiving regions (133, 134; 176; 225) spaced at a distance apart from one another in the direction of a longitudinal axis of a steering shaft (15), **characterised in that** the first bearing element (166; 167) designed to rotatably mount the steering shaft (15) is firstly fitted on the first receiving region (133; 134; 176; 225) of a steering column tube (1; 125) and a bearing point (172; 175) of the steering shaft (15), and a pre-specified mounted dimension (192) between a point (190) on the steering column tube (1; 125) and a measurement marker (191) on the steering shaft (15) can be set and, once the steering shaft (15) has been positioned and adjusted relative to the steering column tube (1; 125), at least one of the bearing parts (183; 184) of the first bearing element (166) is joined to the steering column tube (1; 125) or to the steering shaft (15) by means of a joining element (185), after which the other bearing element (167) is adjusted in terms of its position relative to the first bearing element (166) and then fixed.

21. Method of assembling bearing elements (166, 167) on a steering column tube (1; 125) of a support casing (124), whereby the bearing elements (166, 167) are disposed on receiving regions (133, 134; 176; 225) spaced at a distance apart from one another in the direction of a longitudinal axis of a steering shaft (15), **characterised in that** the first bearing element (166, 167) designed to rotatably mount the steering shaft (15) is mounted on the first receiving region (133, 134; 176; 225) of a steering column tube (1; 125) and a bearing point (172, 175) of the steering shaft and is joined to the steering column tube (1; 125) or the steering shaft (15) by means of a joining element (185), after which the second bearing element (166, 167) designed to rotatably mount the steering shaft (15) is mounted on the second receiving region (133, 134; 176; 225) of the steering column tube (1; 125) and a bearing point (172, 175) of the steering shaft (15), and a fitted dimension (192) between the first and second bearing element (166, 167) is set so that the steering shaft (15) is mounted essentially without any clearance in the axial direction, and the second bearing element (166, 167) is then joined to the steering column tube (1; 125) or to the steering shaft (15) by means of a joining element (185).

22. Method as claimed in claim 21, **characterised in that** the first bearing element (166, 167) designed to rotatably mount the steering shaft (15) is firstly mounted on the first receiving region (133, 134; 176; 225) of a steering column tube (1; 125) and a bearing point (172, 175) of the steering shaft (15) and a specific fitted dimension (192) between a point (190) on the steering column tube (1; 125) and a measurement marker (191) on the steering shaft (15) is set, and once the steering shaft (15) and the steering column tube (1; 125) have been adjusted relative to one another, at least one of the bearing parts (183, 184) of the first bearing element (166) is joined to the steering column tube (1; 125) or to the steering shaft (15) by means of a joining element (185).

23. Method as claimed in claim 20 or 22, **characterised in that** the predeterminable measurement marker (191) is pre-set by means of a bearing point (172) provided on the steering shaft (15) or is a free dimension.

24. Method as claimed in claim 20 or 21, **characterised in that** the inner bearing part (184) of the first bearing element (166) is positioned in the longitudinal direction on the steering shaft (15) against a shoulder (173) on the steering shaft (15), after which the steering column tube (1; 125) is positioned and adjusted relative to the steering shaft (15) and the outer bearing part (183) is joined to the steering column tube (1; 125) in a positive and/or force-fit arrangement by means of the joining element (185).

25. Method as claimed in claim 20 or 21, **characterised in that** the second bearing element (167) is held in position during a pre-definable run-in phase and is further adjusted relative to the first bearing element (166) if necessary until a predeterminable mechanical desired value is obtained, after which at least one of the bearing parts (183; 184) of the bearing element (167) is joined to the receiving region (133; 134; 176; 225) of the steering column tube (1; 125) and/or the steering shaft (15) in its adjusted position in a positive and/or force-fit arrangement by means of the joining element (185).

26. Method as claimed in claim 20 to 21, **characterised in that** the joining element (185) is provided in the form of a laser welded joint, preferably without using additional material.

27. Method as claimed in claim 25, **characterised in that** the desired value of pretensioning in the steering shaft (15) is determined on the basis of the rolling friction applied to turn the steering shaft (15) and is set by varying the fitted dimension (192) corresponding to a longitudinal distance (189) between the bearing elements (166, 167).

## Revendications

1. Caisson de support (124) pour le montage d'un arbre de direction (15), comportant un tube de protection (1; 125), qui entoure au moins partiellement l'arbre de direction (15) et qui comporte des zones de logement (176; 225), espacées les unes des autres dans la direction de l'arbre de direction (15) et destinées à recevoir des éléments de palier (166, 167) supportant l'arbre de direction (15), lesquels éléments de palier (166, 167) comportent chacun une partie de palier extérieure (183) et une partie de palier intérieure (184), ainsi que des corps de roulement, disposés entre celles-ci, sachant que la partie de palier extérieure (183) des éléments de palier (166, 167) est formée dans le sens de sa dimension longitudinale par une partie de guidage (202) recevant les corps de roulement et par une queue (201) apte à être montée sur la zone de logement (176; 225), **caractérisé en ce que** la partie de palier extérieure (183) de l'un des éléments de palier (166, 167) au moins comporte, en plus, entre la queue (201) et la partie de guidage (202), situées à l'opposé l'une de l'autre, une zone de réglage (203), par laquelle une dimension de montage (192) entre le premier et le deuxième élément de palier (166, 167) peut être réglée de telle sorte que l'arbre de direction (15) est monté sensiblement sans jeu dans la direction axiale, et **en ce que** les éléments de palier (166, 167) sont reliés chacun par l'intermédiaire d'un élément de liaison (185) avec le tube de protection (1; 125) et/ou l'arbre de direction (15).

2. Caisson de support selon la revendication 1, **caractérisé en ce que** la partie de palier extérieure (183) est formée par une pièce emboutie et/ou découpée en matériau métallique.

3. Caisson de support selon la revendication 1, **caractérisé en ce que** la queue (201) et la zone de réglage (203) sont formées chacune par un segment annulaire de même dimension, entourant concentriquement un axe médian longitudinal (16).

4. Caisson de support selon la revendication 1 ou 2, **caractérisé en ce que** la partie de palier extérieure (183) dans son tracé longitudinal depuis la zone de réglage (203) vers la partie de guidage (202) comporte un élargissement radial avec une largeur donnée.

5. Caisson de support selon la revendication 1 ou 2, **caractérisé en ce que** la partie de palier extérieure (183) dans son tracé longitudinal depuis la zone de réglage (203) vers la partie de guidage (202) comporte un rétrécissement radial avec une largeur donnée.

6. Caisson de support selon l'une quelconque des revendications 1 à 5, **caractérisé en ce que** la zone de réglage (203) de la partie de palier extérieure (183) a une largeur (205) de 0,5 mm à 10 mm environ, en particulier entre 0,7 mm et 4 mm.

7. Caisson de support selon la revendication 1, **caractérisé en ce que** la queue (201) et la zone de réglage (203) de la partie de palier extérieure (183) sont formées par plusieurs saillies (227) en arc de cercle diamétralement opposées, avec des chambres de réception séparant celles-ci les unes des autres et destinées à recevoir au moins par zones des segments de réception (228) d'une zone de logement (225).

8. Caisson de support selon la revendication 1, **caractérisé en ce que** les zones de logement (176; 225) sont formées par une zone partielle du tube de protection (1; 125).

9. Caisson de support selon la revendication 1, **caractérisé en ce que** les zones de logement (176; 225) sont formées par des points de logement (7, 8; 135, 136; 177) disposés au niveau des zones d'extrémité distales (131, 132) du tube de protection (1; 125).

10. Caisson de support selon la revendication 1, **caractérisé en ce que** le tube de protection (125) comporte une première partie (127) et une autre partie (128), qui sont réalisées chacune en forme de demi-cuvette et sont reliées l'une à l'autre par au moins un élément de liaison dans une zone de liaison (126) située dans un plan parallèle au plan médian longitudinal vertical, et **en ce que** les zones de logement (133, 134; 176; 225) pour les éléments de palier (166, 167) sont formées par des parties de palier (137) sensiblement en forme de coque, formées chacune d'un seul tenant avec les parties (127, 128).

11. Caisson de support selon la revendication 9, **caractérisé en ce que** le tube de protection (1; 125) comporte une première partie (3; 127) et une autre partie (4; 128), qui sont reliées l'une à l'autre par un élément de liaison, et une des parties (3, 4; 127, 128) comporte, dans un plan perpendiculaire à sa dimension longitudinale, une section sensiblement en forme de U ou trapézoïdale, et les points de logement (7, 8; 135, 136; 177) sont prévus sur les deux faces frontales opposées, détournées l'une de l'autre, de la première et/ou de l'autre partie (3, 4; 127, 128).

12. Caisson de support selon la revendication 1, **caractérisé en ce que** le tube de protection (1; 125) est formé par un tube profilé avec une section ronde dans un plan perpendiculaire à sa dimension longitudinale, et **en ce que** celui-ci forme, sur les zones d'extrémité distales (131, 132), les zones de logement (176; 225) pour les éléments de palier (166, 167).

13. Caisson de support selon la revendication 1, **caractérisé en ce que** la zone de logement (176; 225) concernée comporte une zone de réglage (213), qui est conçue pour le réglage du tube de protection (1; 125) par rapport à la partie de palier extérieure (183) et qui a une largeur (212) entre 0,5 mm et 10 mm environ, en particulier entre 0,7 mm et 4 mm.

14. Caisson de support selon la revendication 1, **caractérisé en ce que** l'élément de liaison (185) est disposé au moins par points entre l'élément de palier (166, 167) et le tube de protection (1; 125) et/ou l'arbre de direction (15) ou sur tout le pourtour du tube de protection (1; 125) et/ou de l'arbre de direction (15).

15. Caisson de support selon la revendication 1 ou 14, **caractérisé en ce que** l'élément de liaison (185) est formé par un cordon de soudure, de préférence par au moins un cordon de soudure par laser ou plasma.

16. Caisson de support selon la revendication 1 ou 14, **caractérisé en ce que** l'élément de liaison (185) est formé par une couche de colle.

17. Caisson de support selon la revendication 1 ou 14, **caractérisé en ce que** l'élément de liaison (185) est formé par un assemblage brasé.

18. Caisson de support selon la revendication 1 ou 14, **caractérisé en ce que** l'élément de liaison (185) est formé par un assemblage bout à bout sous pression ou par rivetage.

19. Caisson de support selon la revendication 1, **caractérisé en ce que** la partie de palier extérieure (183) est munie, dans le sens périphérique, en alternance de saillies (227) et de chambres de réception, et les saillies (227) s'emboîtent dans des chambres de réception (226) de la zone de logement (225), et des segments de réception (228) du tube de protection (1; 125) s'emboîtent dans les chambres de réception de la partie de palier extérieure (183).

20. Procédé pour le montage d'éléments de palier (166, 167) sur un tube de protection (1; 125) d'un caisson de support (124), dans lequel les éléments de palier (166, 167) sont logés dans des zones de logement (133, 134; 176; 225) espacées les unes des autres dans la direction d'un axe longitudinal d'un arbre de direction (15), **caractérisé en ce que,** d'abord, le premier élément de palier (166, 167), supportant de manière mobile en rotation l'arbre de direction (15), est monté sur la première zone de logement (133, 134; 176; 225) d'un tube de protection (1; 125) et d'un point de support (172, 175) de l'arbre de direction (15), et une dimension de montage (192) prévue est réglée entre un point (190) sur le tube de protection (1; 125) et un repère de mesure (191) sur l'arbre de direction (15), et **en ce que**, une fois que l'arbre de direction (15) et le tube de protection (1; 125) ont été ajustés l'un par rapport à l'autre, au moins l'une des parties de palier (183, 184) du premier élément de palier (166) est assemblée par l'intermédiaire d'un élément de liaison (185) avec le tube de protection (1; 125) ou l'arbre de direction (15), à la suite de quoi le deuxième élément de palier (167) est réglé dans sa position par rapport au premier élément de palier (166) et est fixé ensuite.

21. Procédé pour le montage d'éléments de palier (166, 167) sur un tube de protection (1; 125) d'un caisson de support (124), dans lequel les éléments de palier (166, 167) sont logés dans des zones de logement (133, 134; 176; 225) espacées les unes des autres dans la direction d'un axe longitudinal d'un arbre de direction (15), **caractérisé en ce que** le premier élément de palier (166, 167), supportant de manière mobile en rotation l'arbre de direction (15), est monté sur la première zone de logement (133, 134; 176; 225) d'un tube de protection (1; 125) et d'un point de support (172, 175) de l'arbre de direction (15), et est assemblé par l'intermédiaire d'un élément de liaison (185) avec le tube de protection (1; 125) ou l'arbre de direction (15), à la suite de quoi le deuxième élément de palier (166, 167), supportant de manière mobile en rotation l'arbre de direction (15), est monté sur la deuxième zone de logement (133, 134; 176; 225) du tube de protection (1; 125) et d'un point de support (172, 175) de l'arbre de direction (15), et une dimension de montage (192) entre le premier et le deuxième élément de palier (166, 167) est réglée de telle sorte que l'arbre de direction (15) est monté sensiblement sans jeu dans la direction axiale, et ensuite, le deuxième élément de palier (166, 167) est relié par l'intermédiaire d'un élément de liaison (185) avec le tube de protection (1; 125) ou l'arbre de direction (15).

22. Procédé selon la revendication 21, **caractérisé en ce que,** d'abord, le premier élément de palier (166, 167), supportant de manière mobile en rotation l'arbre de direction (15), est monté sur la première zone de logement (133, 134; 176; 225) d'un tube de protection (1; 125) et d'un point de support (172, 175) de l'arbre de direction (15), et une dimension de montage (192) prévue est réglée entre un point (190) sur le tube de protection (1; 125) et un repère de mesure (191) sur l'arbre de direction (15), et **en ce que**, une fois que l'arbre de direction (15) et le tube de protection (1; 125) ont été ajustés l'un par rapport à l'autre, au moins l'une des parties de palier (183, 184) du premier élément de palier (166) est assemblée par l'intermédiaire d'un élément de liaison (185) avec le tube de protection (1; 125) ou l'arbre de direction (15).

23. Procédé selon la revendication 20 ou 22, **caractérisé en ce que** le repère de mesure (191) prédéfinissable est défini par un point de support (172) prévu sur l'arbre de direction (15) ou par une dimension libre.

24. Procédé selon la revendication 20 ou 21, **caractérisé en ce que** la partie de palier intérieure (184) du premier élément de palier (166) est positionnée contre un épaulement (173) sur l'arbre de direction (15), à la suite de quoi le tube de protection (1; 125) est ajusté par rapport à l'arbre de direction (15), et la partie de palier extérieure (183) est assemblée par conjugaison de forme et/ou par force avec le tube de protection (1; 125) par l'intermédiaire de l'élément de liaison (185).

25. Procédé selon la revendication 20 ou 21, **caractérisé en ce que** le deuxième élément de palier (167) est maintenu dans sa position pendant une phase d'introduction prédéfinissable et, le cas échéant, continue à être réglé par rapport au premier élément de palier (166) jusqu'à ce qu'une valeur de consigne mécanique prédéfinissable soit atteinte, à la suite de quoi au moins l'une des parties de palier (183, 184) de l'élément de palier (167) est assemblée dans sa position réglée, par conjugaison de forme et/ou par force, avec la zone de logement (133, 134; 176; 225) du tube de protection (1; 125) et/ou de l'arbre de direction (15) par l'intermédiaire de l'élément de liaison (185).

26. Procédé selon la revendication 20 ou 21, **caractérisé en ce que** l'élément de liaison (185) est formé par un cordon de soudure par laser, de préférence sans matériau d'apport.

27. Procédé selon la revendication 25, **caractérisé en ce que** la valeur de consigne de la précontrainte dans l'arbre de direction (15) est déterminée à partir du frottement par roulement, qui doit être appliqué pour la rotation de l'arbre de direction (15), et est réglée par la variation de la dimension de montage (192) correspondant à une distance longitudinale (189) entre les éléments de palier (166, 167).
